(19) Europäisches Patentamt
European Patent Office
Office européen des brevets

(11) **EP 1 910 868 B1**

(12) **EUROPÄISCHE PATENTSCHRIFT**

(45) Veröffentlichungstag und Bekanntmachung des Hinweises auf die Patenterteilung:
**18.11.2009 Patentblatt 2009/47**

(21) Anmeldenummer: **06762686.1**

(22) Anmeldetag: **19.07.2006**

(51) Int Cl.:
*G01S 17/95* (2006.01)    *G01P 5/26* (2006.01)

(86) Internationale Anmeldenummer:
**PCT/EP2006/007085**

(87) Internationale Veröffentlichungsnummer:
**WO 2007/009759 (25.01.2007 Gazette 2007/04)**

(54) **VERFAHREN UND LIDAR-SYSTEM ZUR MESSUNG VON LUFTTURBULENZEN AN BORD VON LUFTFAHRZEUGEN SOWIE FÜR FLUGHÄFEN UND WINDFARMEN**

METHOD AND LIDAR SYSTEM FOR MEASURING AIR TURBULENCES ON BOARD AIRCRAFT AND FOR AIRPORTS AND WIND FARMS

PROCEDE ET SYSTEME LIDAR POUR MESURER DES TURBULENCES D'AIR A BORD D'AERONEFS AINSI QUE POUR LES AEROPORTS ET LES PARCS D'EOLIENNES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.07.2005 DE 102005034729**

(43) Veröffentlichungstag der Anmeldung:
**16.04.2008 Patentblatt 2008/16**

(73) Patentinhaber: **Airbus Deutschland GmbH**
**21129 Hamburg (DE)**

(72) Erfinder: **HALLDORSSON, Thorsteinn**
**85586 Poing (DE)**

(74) Vertreter: **Schatt, Markus F.**
**Schatt IP**
**Patent- und Rechtsanwaltskanzlei**
**Rindermarkt 7**
**80331 München (DE)**

(56) Entgegenhaltungen:
**DE-A1- 10 010 045    DE-A1- 10 316 762**
**DE-A1- 19 502 993**

• **FUNES-GALLANZI M: "TUNNELING VELOCIMETRY:CONSILIENCE COMES TO THE STUDY OF FLUID DYNAMICS" INTERNATIONAL SYMPOSIUM ON APPLICATIONS OF LASER TECHNIQUES TO FLUID MECHANICS, 10. Juli 2000 (2000-07-10), XP002147526**

**EP 1 910 868 B1**

**Beschreibung**

TECHNISCHES GEBIET

Die vorliegende Erfindung betrifft ein Verfahren zur Messung von Luftturbulenzen, ein Lidar-System zur Messung von Luftturbulenzen sowie ein Luftfahrzeug und insbesondere ein Flugzeug oder ein Hubschrauber mit einem solchen Lidar-System.

Aus der DE 195 02 993 A1 ist ein Verfahren zur Messung von dreidimensionalen Strömungsgeschwindigkeiten mittels eines Laserstrahls vorgegebener Wellenlänge in einem Raumbereich bekannt. Dabei wird eine Strömung mit Tracerpartikeln geimpft, und ein flächenhaftes Meßvolumen der mit Tracerpartikeln geimpften Strömung mehrfach hintereinander beleuchtet. Das mehrfach beleuchtete Meßvolumen wird in einer Abbildungsrichtung auf mindestens einem Fotosensor abgebildet, um Bilder des beleuchteten Meßvolumens aufzuzeichnen und die dreidimensionalen Strömungsgeschwindigkeiten werden aus den mit dem Fotosensor aufgezeichneten Bildern des mehrfach beleuchteten Meßvolumens ermittelt.

Luftturbulenzen in der Atmosphäre sind in der Luftfahrt für den Strömungsverlauf an Flügeloberflächen sehr störend, denn sie führen zu erhöhtem Luftwiderstand und zu starken Änderungen des Auftriebs. Maßnahmen zu ihrer Vermeidung bzw. Abschwächung setzen voraus, dass sie rechtzeitig erkannt und vermessen werden.

Die Messung von Wind- und Turbulenzverhältnissen ist aber auch zum Beispiel für Windfarmen wichtig. Bei Windfarmen ist die Wirksamkeit der Stromerzeugung von der richtigen Aufstellung der Rotoren in Bezug auf örtliche Wind- und Turbulenzverhältnisse abhängig. Für einen effizienten und sicheren Betrieb von Windfarmen ist aus diesen Gründen eine genaue, berührungslose Vermessung des charakteristischen Wind- und Wirbelfeldes an dem ausgesuchten Standort bei unterschiedlichen Wetterbedingungen vor ihrem Bau von besonderer Bedeutung. Die Vermessung dieser Luftdaten mit meteorologischen Messstationen und vereinzelt mit Doppler-Lidar- Systemen gelten heute noch als aufwendig, teuer und ungenau.

An Flughäfen können Turbulenzen, die von einem startenden oder landenden Flugzeug ausgehen, die sogenannte Wirbelschleppe (wake vortex), das Flugverhalten eines hintertlerfliegenden Flugzeugs erheblich beeinflussen. Ihre Kräfte und Drehmomente können z. B. ein Abdriften und Rollen kleinerer Flugzeuge verursachen. In vielen Fällen kommt es sogar zu kritischen Flugzuständen, die in einigen extremen Situationen zu Unfällen geführt haben.

Die Wirbelschleppen sind beim Betrieb von stark frequentierten Flughäfen in vielen Ländern auch zu einem gravierenden wirtschaftlichen Problem geworden. Denn aus der Unsicherheit über ihre Stärke und Lage schreibt die "International Civil Aviation Organisation (ICAO)" einen zeitlichen Mindestabstand zwischen Starts und Landungen, je nach Größenverhältnissen des voraus- und nachfliegenden Flugzeugs, von etwa 2 - 3 Minuten vor. Mit dem wachsenden Verkehrsaufkommen an Großflughäfen wird andererseits eine zukünftige generelle Verkürzung der Start- und Landesequenzen auf unter 1 Minute angestrebt. Daher wird dringend eine Lösung gesucht, um Flugzeuge mit wesentlich geringerem Sicherheitsrisiko durch das Einflussgebiet der Wirbelschleppen zu leiten. Dies setzt aber ihre rechtzeitige Erkennung und Vermessung sowohl bei getrübter als auch bei klarer Sicht voraus.

Wirbelschleppen entstehen durch unterschiedliche Umströmung an der unteren und oberen Seite der Flügel während des Strömungsabrisses an den Flügelkanten und Flügelspitzen und sind in ihrer Stärke von Spannweite und Gewicht der Flugzeuge abhängig. Sie bilden in der vertikalen Ebene hinter beiden Flügeln mit ihrem Zentrum bei etwa 2/3 ihrer Länge spiralförmige und in ihrem Drehsinn gegenläufige Luftrotoren mit einem Durchmesser in der Größenordnung der halben Flügellänge. Die Wirbelschleppen driften beim Verlassen des Flugzeugs in der Höhe etwas ab und brechen in kleinere Verwirbelungen auf, bis sie nach mehreren Minuten ihre gesamte kinetische Energie als Wärme an die umgebende Luft abgegeben haben. Seiten- und Vertikalwinde bewegen die Wirbel als Ganzes und beeinflussen ihre Auflösung. Abgase der Triebwerke, vor allem heiße Luft, Ruß und Wasserdampf, sind den Wirbeln beigemischt und nehmen z. T. den gleichen Bewegungsablauf wie diese an. In der Stratosphäre sind Wirbelschleppen z. B. an den Kondensstreifen des Wasserdampfes hinter Flugzeugen sichtbar.

Eine Wirbelschleppe ist eine Folge des Auftriebes und kann deshalb weder in nächster noch in ferner Zukunft durch neue Flügeldesigns vollständig unterbunden werden. Ihre Intensität kann jedoch mit verschiedenen aerodynamischen Zusatzmaßnahmen am Flügel, z. B. durch Auffächerung oder Teilzerlegung der Strömung nach Verlassen des Flügels, abgeschwächt werden.

Für ein hinterher fliegendes Flugzeug sind vor allem Unsymmetrien der Luftbewegungen an beiden Flügeln und plötzlicher Auftrieb oder Fallwinde gefährlich, die in Bodennähe auf das ganze Flugzeug wirken können. Diese Luftbewegungen müssen deshalb im Voraus, d.h. aus einer gewissen Mindestentfernung, mit einer ausreichenden räumlichen Auflösung längs und quer zur Flugachse vermessen werden. Da Landevorgänge unter allen möglichen Wetterbedingungen durchgeführt werden, müssen Wirbelschleppen sowohl im trüben Wetter, d.h. bei geringer Sichtweite, als auch bei klarem Wetter bzw. bei voller Sicht detektiert und vermessen werden können.

STAND DER TECHNIK

Bisher wird mit einem scannenden Doppler-Radar bei trübem Wetter, d. h. bei Regen, Nebel und Wolken, die Bewegung größerer Luftschwebeteilchen oder Hydrometeore mit einem Durchmesser von 10 $\mu$m bis zu einigen Millimetern in Distanzen von einigen zehn nautischen Meilen aufgezeichnet. Doppler-Radargeräte, installiert am Flughafen oder im Flugzeug, können bei trübem Wetter deshalb Luftströmungen wie Scherwinde und Wirbel detektieren. Ihre Präsenz kann dem Piloten mitgeteilt oder angezeigt werden, damit er sie in sicherer Entfernung umfliegen kann.

Die Radarwellenlänge im Zentimeter- bis Millimeterbereich ist jedoch zu lang um bei klarem Wetter eine verwertbare Rückstreuung der übrigen, kleineren Aerosole, z.B. mit einem Durchmesser unter einem Mikrometer, zu detektieren. Aus diesem Grunde werden heute Doppler-Infrarot-Lidars mit einer wesentlich kürzeren Wellenlänge im Mikrometerbereich an einigen verkehrsreichen Flughäfen versuchsweise eingesetzt. Da die Rückstreuung der Aerosole wegen ihrer unterschiedlichen und oft nur geringen Konzentration sehr schwankend und sogar verschwindend sein kann, wird sogar die Rückstreuung an den wesentlich kleineren Luftmolekülen zur Detektion in einem UV-Doppler-Lidar als Zielgröße verwendet.

Die Druckschrift DE 103 16 762 A1 beschreibt ein Verfahren zur Erfassung von Windgeschwindigkeiten mit einem Doppler-Lidar-System. Dabei wird ein Laserstrahl von einer Sendeeinrichtung zu einem Raumbereich hin ausgesandt und das aus dem Raumbereich zurückgestreute Licht empfangen. Zur Bestimmung einer Doppler-Verschiebung wird ein Interferogramm erzeugt, dessen Intensitätsverteilung mit Referenzmustern verglichen wird, die zuvor für definierte Parameter bestimmt wurden. Aus dem Vergleich wird die Doppler-Verschiebung als Maß für die Windgeschwindigkeit ermittelt.

Die am Boden aufgestellten meteorologischen Messgeräte bzw. Doppler-Radars und Doppler-Lidars verschaffen eine globale Übersicht über Wind- und Wirbelsituation an den Flughäfen. Diese reicht aber nur zur gemeinsamen Warnung vor kritischen Wirbel-Situationen an alle betroffenen Flugzeuge aus, ohne die Gefährdung einzelner Flugzeuge zu berücksichtigen. Eine zukünftige generelle Kürzung der Start- und Landesequenzen an allen Flughäfen ist erst dann möglich, wenn jedes Flugzeug über ein eigenes bordgetragenes Messsystem verfügt, welches einzelne Wirbel auf seinem Flugweg bei allen Wetterbedingungen rechtzeitig erkennt und ihr Gefahrenpotential unmittelbar bewertet.

Doppler-Radars in Automobilen mit einer Sendefrequenz von 24 GHz und 77 GHz sind in der Lage, bei trübem Wetter über einen kleinen Winkelbereich solide Hindernisse außerhalb der Sichtweite des Fahrers zu erkennen. Dies beruht auf der verbesserten Reichweite der Radarstrahlung durch den Dunst gegenüber sichtbarem Licht. Die Atmosphäre ist jedoch bei diesen Frequenzen keineswegs vollkommen transparent, sondern es wird auch ein deutliches Signal von den Hydrometeoren des Dunstes selbst empfangen, das in dieser Anwendung für das Auto ausgeblendet wird. Dieses Hintergrundsignal des Dunstes wäre aber grundsätzlich geeignet, um die Wirbelbewegung der Luft anhand der mitbewegten Hydrometeore zu detektieren und abzubilden. Diese Radarfrequenzen haben den besonderen Vorteil, dass Sie für den allgemeinen Verkehr die internationale Funkzulassung bekommen haben, und wären somit für die Radar-Entdeckung von Wirbelschleppen aus dem Flugzeug bei trübem Wetter besonders geeignet.

Fahrzeugradars haben den weiteren Vorteil, dass sie heute bereits sehr kompakt und kostengünstig hergestellt werden können. Für ihren Ausbau zu einer Wirbel-Warnung für Flugzeuge bzw. zur Flugregelung müsste die Luftbewegungen zusätzlich zu ihrer Entfernung gleichzeitig in einer größeren Fläche senkrecht zur Flugrichtung an mehreren Stellen vor dem Flugzeug abgebildet werden. Ein Abtasten eines größeren Winkelbereiches vor dem Flugzeug könnte heute elektronisch mit phasengekoppelten Antennen-Arrays in kurzer Zeit mit hoher Wiederholfrequenz durchgeführt werden. Die Weiterentwicklung dieser kompakten Radars bis zu flugzeuggetragenen Systemen für Wirbelschleppenerkennung in Wolken, schwerem Regen und Nebel mit einer guten Entfernungs- und Querauflösung wird heute angestrebt.

Eine zukunftsträchtige Radar-Lösung für trübes Wetter dieser Art reicht jedoch zur zuverlässigen Wirbelerkennung im Flugbetrieb alleine nicht aus. Denn die Wirbel bilden bei klarem Wetter keine geringere Gefahr als bei trübem Wetter. Deshalb wurde versucht, das Radar durch ein Lidar, d. h. ein zusätzliches Abtasten im optischen Bereich des Spektrums, in dem die kleineren Luftpartikel detektiert werden können, zu ergänzen.

Doppler-Lidars zur Messung in der klaren Atmosphäre sind jedoch lange nicht so kompakt wie Doppler-Radars. Ihr Sendestrahl kann mit heutiger Technik nur mit mechanischen Scannern geringer Winkelgeschwindigkeit bewegt werden. Dies erfordert dann eine lange Messdauer, in der das Flugzeug und die Turbulenzen sich entlang der Messachse bewegen. Da die Messwerte dadurch nicht zeitgleich entstehen, liefern sie ein zeitlich verzerrtes Abbild der momentanen Luftbewegung vor dem Flugzeug. Besonders nachteilig ist die geringe Geschwindigkeitsauflösung in axialer Richtung, die bei der niedrigen Pulswiederholfrequenz von Lidars - im Gegensatz zu Radars - nicht mehr durch Mittelung vieler Messungen verbessert werden kann.

Im Vergleich zu Doppler-Radars sind Doppler-Lidars heute insgesamt sehr kompliziert im Aufbau und teuer, und sind deshalb für den Einbau in kleinere Flugzeuge - die von Wirbelschleppen großer vorausfliegender Flugzeuge am meisten gefährdet sind - nicht geeignet.

Die Druckschrift US 2003/0009268 A1 beschreibt ein Vorhersagesystem für Windturbulenzen zur Messung der Geschwindigkeit einer dreidimensionalen Luftströmung, das auf dem Doppler-Effekt beruht. Dabei wird von einem Flugzeug aus ein Laserstrahl ausgesandt, der einen Raumbereich konusartig scannt. Das aus dem Raumbereich zurück gestreute Licht wird mit Hilfe eines optischen Systems empfangen und mit Hilfe des Doppler-Effekts wird daraus die Geschwindigkeit eines Luftwirbels in dem Raumbereich ermittelt.

Das US-Patent 4,195,931 beschreibt eine Vorrichtung zur Bestimmung von Ort und Intensität einer Luftturbulenz, wobei ein gepulster Laserstrahl in einen Raumbereich gesendet wird und das zurück gestreute Laserlicht analysiert wird. Dabei wird das Interferenzmuster des empfangenen Lichts mittels eines Spektroskops bestimmt. Das Spektrum des zurück gestreuten Lichts wird mit dem Standardspektrum ohne Vorhandensein einer Luftturbulenz korreliert.

In der Patentschrift DE 40 13 702 C2 werden ein Verfahren und eine Einrichtung zur Erfassung von Turbulenzen in der Atmosphäre beschrieben, bei dem ein Laser-Lichtbündel vorgegebener Frequenz in einen ausgewählten Raumbereich ausgesandt wird und das aus dem Raumbereich zurück gestreute Licht aufgefangen und mit dem ausgesandten Licht überlagert wird. Die Doppler-Verschiebung zwischen den Frequenzen des ausgesandten und des zurück gestreuten Lichts werden bestimmt, und daraus wird der Richtungssinn und der Betrag der Windgeschwindigkeit in Messrichtung ermittelt. Dabei wird ein Laser-Lichtbündel in zwei Teilbündel zerlegt, wobei das erste Teilbündel in den Raumbereich ausgesendet wird und das aus dem Raumbereich zurück gestreute Licht mit dem zweiten Teilbündel überlagert wird.

Das US-Patent 6,184,981 B1 offenbart ein Verfahren, bei dem ein gepulster Laserstrahl ausgesendet und von einem Ziel zurück reflektiert wird und das empfangene Signalspektrum mit einem Referenzspektrum verglichen wird.

In dem Artikel "Two-channel direct-detection Doppler lidar employing a chargecoupled device as a detector" von Irgang, Todd D., et al., Applied Optics, Vol. 41, No. 6, vom 20. Februar 2002, wird ein Zweikanal-Doppler-Lidar beschrieben, das ein CCD als Detektor aufweist. Das Lidarsystem misst Windbewegungen mit Hilfe des von Aerosolen und Molekülen zurück gestreuten Lichts in zwei separaten Kanälen, wobei das Licht eines Kanals in den anderen geführt wird.

## AUFGABENSTELLUNG

Es ist die Aufgabe der vorliegenden Erfindung, ein geeignetes Verfahren zur Detektion von Turbulenzen und Wirbelschleppen bei klarem Wetter vorzuschlagen.

Weiterhin soll ein geeignetes Messsystem angegeben werden, das kompakt ausgestaltet werden kann und die Inhomogenität und Bewegung der Luft in einer ausgedehnten Fläche, d.h. über einen größeren Winkelbereich, zeitgleich senkrecht zur Messachse sichtbar macht. Das Messsystem soll zur Fernmessung, d.h. für Messungen in einer definierten größeren Entfernung und in einem begrenzten Volumen, anwendbar sein. Dabei soll die Messung gegenüber einer Bewegung in Richtung der Messachse unempfindlich sein.

Diese Aufgabe wird gelöst durch das Verfahren zur Messung von Luftturbulenzen gemäß Patentanspruch 1, durch das Lidar-System gemäß Patentanspruch 13; und durch ein Luftfahrzeug mit einem solchen Lidar-System gemäß Patentanspruch 23.

Bei dem erfindungsgemäßen Verfahren zur Messung von Luftturbulenzen mit einem Lidar-System wird ein gepulster aufgeweiteter Laserstrahl vorgegebener Wellenlänge zu einem Raumbereich hin ausgesandt und aus dem Raumbereich zurückgestreutes Licht wird empfangen, wobei zu einem ersten Zeitpunkt t1 und zu einem zweiten Zeitpunkt t2 nach Aussenden eines Laserpulses jeweils die Intensitätsverteilung im Querschnitt des zurückgestreuten Lichts gemessen wird und aus dem Vergleich beider Intensitätsverteilungen eine Luftturbulenz in einem entfernten Messfeld bestimmt wird. Durch die Erfindung können Luftturbulenzen und Wirbelschleppen bei klarem Wetter erkannt bzw. detektiert und dargestellt werden. Das Verfahren ist insbesondere dazu geeignet, an Bord von Luftfahrzeugen durchgeführt zu werden, um während des Fluges Wirbelschleppen zu erkennen, die sich durch vorausfliegende Flugzeuge gebildet haben und sich in einer definierten Entfernung in Flugrichtung befinden. Dabei ist die Entfernung des Messfeldes durch die Zeitpunkte t1 und t2 bestimmt, d.h. durch die Laufzeit des ausgesandten und von Luftschichten in unterschiedlicher Entfernung zurückgestreuten Laserpulses.

Bei dem Verfahren wird nicht die axiale Doppler-Frequenzverschiebung gemessen, sondern es wird das Aufbrechen eines Laserstrahls beim Durchqueren von Luftturbulenzen und Winden in ein gemischtes. fein- und grobkörniges Intensitätsmuster, sogenannte Speckles ausgenutzt.

Vorteilhafterweise werden durch die jeweilige Messung der Intensitätsverteilung derartige Speckles, die bei der Rückstreuung des Laserpulses an Luftmolekülen entstehen, im Querschnitt des zurückgestreuten Lichts detektiert, um aus dem Vergleich der Specklemuster die Luftturbulenz zu bestimmen. D.h., aus einer momentanen Abbildung der Speckles kann die Luftunruhe festgestellt und ausgemessen werden.

Bevorzugt werden die Intensitätsverteilungen zu den beiden Zeitpunkten t1 und t2 mittels einer Kamera bei einer definierten Belichtungsdauer aufgenommen, und aus den entstehenden Bildern wird eine Bilddarstellung der Brechungsindexvariation im Messfeld erzeugt. D.h., mit Doppelaufnahmen, die kurz hintereinander ausgeführt werden, kann auch die Luftbewegung senkrecht zur Messachse bzw. Sichtachse abgeleitet werden. Da die Aufnahmen ein größeres Gebiet, das durch den Aufnahmewinkel bestimmt ist, gleichzeitig erfassen, ist ein zeitraubendes Abscannen nicht mehr nötig, und die transversale Orts- bzw. Geschwindigkeitsauflösung ist über den gesamten Winkelbereich gleichmäßig gut.

Das Aufbrechen eines Laserstrahles mit einem über seinen Querschnitt ursprünglich homogenen Intensitätsverlauf in ein gekörntes Fleckenmuster, Granulationen oder Speckles ist eine Folge der unterschiedlich langen, optischen Weglängen der Teilstrahlen bzw. Elementarwellen des Laserstrahles durch Regionen der Luft mit unterschiedlichem Brechungsindex. Wegen der Kohärenz der primären Strahlung sind auch diese an den Luftbestandteilen, d.h. sowohl Molekülen als auch Aerosolen, gestreuten Elementarwellen untereinander kohärent. Von einem Ort zum anderen innerhalb des Strahles variieren dann Amplitude und Phase der Elementarwellen gegeneinander. Sie überlagern sich schließlich im Raum zu einem komplizierten Interferenzfeld mit räumlich verteilter, unregelmäßiger Intensität. Bei Luftbewegungen wie Wirbeln und damit verbundenen Änderungen der Brechungsindexstruktur wird das Interferenzmuster, d.h. die Speckles, auch räumlich und zeitlich moduliert.

Die Brechungsindexvariationen der Luft werden vorwiegend durch Temperaturunterschiede hervorgerufen. In Wirbelschleppen hinter Flugzeugen entstehen auf Grund der Luftbewegung und ihrem Zerfall Druck-, und Temperaturgradienten. Zusätzlich entstehen in Bodennähe durch die Erwärmung der Erdoberfläche am Tage und Abkühlung in der Nacht Temperaturgradienten in der Luft, die von startenden oder landenden Flugzeugen durchgewirbelt werden. Weiterhin werden heiße Abgase von Triebwerken - vor allem Wasserdampf und Kohlendioxid - der verwirbelten Luft beigemischt. Es entsteht insgesamt in der Wirbelschleppe hinter einem Flugzeug beim Start oder Landung ein strukturiertes Temperaturfeld, was gleichzeitig zu einer inhomogenen Verteilung des Brechungsindexes der Luft führt.

Anders als beim Doppler-Effekt, bei dem aus der axialen Frequenz- bzw. Wellenlängenverschiebung des rückgestreuten Laserlichtes die transversale Geschwindigkeitskomponente der Luftbewegung abgeleitet wird und durch Abscannen eine Anzeige der Luftunruhe über eine größere Fläche entsteht, kann durch Verwendung der Speckles die örtliche Inhomogenität des Brechungsindexes als Folge der Verwirbelung zeitgleich über eine größere Fläche aufgenommen werden und durch den Vergleich von zwei Einzelbildern der Speckleverteilung zu unterschiedlichen Zeiten abgeleitet werden, wobei die zeitliche Modulation des Brechungsindexes bzw. des Specklemusters und zusätzlich die transversale Geschwindigkeitskomponente der Luftbewegung registriert wird. Wichtig für die Anwendung der Speckles, ist ihre statistisch verteilte Größe und Intensität. Damit sind sie für die eindeutige Anzeige von sowohl Fein- als auch Grobstrukturen der Brechungsindexverteilung geeignet.

In diesem Sinne spielen die Brechungsindexvariationen bei dem vorgeschlagenen Messsystem der Erfindung eine ähnliche Rolle wie Aerosole bei Radar und Lidar. Beide werden als Keime verwendet, die von der Luft mitgetragen werden und deren Bewegung dann gleichzeitig die Luftbewegung anzeigen kann. Wie dies zur Vermessung von Turbulenzen mit den Speckles im Sinne der Erfindung in Einzelheiten dienen kann, wird nachfolgend näher betrachtet.

In der heute allgemein akzeptierten Kolmogorov Modell-Beschreibung der zeitlichen Entwicklung von Turbulenzen wird angenommen, dass Turbulenzen in der Atmosphäre mit dem sogenannten "äußeren" Durchmesser $L_o$, bis zu mehreren zehn oder hundert Metern, durch die innere Reibung der Luft kaskadenförmig mit der Zeit in immer kleinere Turbulenzen ohne Energieaustausch mit der Umgebung aufbrechen, bis sie zuletzt bei einer Mindestgröße $l_o$, dem sogenannten "inneren" Durchmesser (in der Größenordnung von einigen Millimetern) ankommen und sich durch Abgabe ihrer gesamten kinetischen Energie als Wärme vorwiegend über Konvektion und Diffusion an ihre Umgebung auflösen. Dieser Prozess führt mit der Zeit innerhalb der Wirbel zur Ausbildung eines feinkörnigen Temperaturstrukturfeldes, das erst langsam durch Wärmeausgleich mit der umgebenden Luft verschwindet.

Der Brechungsindex $n$ ist von der Temperatur $T$ wesentlich stärker als von Schwankungen des Luftdrucks $p$ abhängig, wobei ein geringer Einfluss von Luftfeuchtigkeit im visuellen Bereich des Spektrums vernachlässigt werden kann, mit:

$$n = 1 + 77{,}6 \times 10^{-6} (1 + 7{,}52 \times 10^{-3}\, \lambda^{-2})\, p/T$$

$$n = 1 + 79 \times 10^{-6}\, p/T \quad \text{und} \quad dn/dT = 79\, p/T^2$$

mit $p$ als Luftdruck in millibar, mit $T$ als Temperatur in Kelvin und $\lambda$ als Wellenlänge in $\mu m$, (hier zum Beispiel mit $\lambda = 0{,}5\,\mu m$).

Die zeitlich gemittelte Variation des Brechungsindexes wird in Abhängigkeit vom Ort durch die sogenannte Brechungsindex Strukturfunktion $D_n(\mathbf{x}, \mathbf{r})$:

$$D_n(x,r) = < \{ \, n \, (x+r) - n(x) \}^2 >$$

ausgedrückt, wobei die Variablen *x* und *r* die dreidimensionalen Ortsvektoren repräsentieren.

Wenn der Betrag des Abstandsvektors *r* zwischen dem äußeren und dem inneren Durchmesser $L_o$ und $I_o$ liegt, kann die Strukturfunktion als Funktion des Abstandes und des Brechungsindexstrukturparameters $C_n^2(x)$ angegeben werden mit:

$$D_n(x,r) = C_n^2 \, (x) \, r^{2/3} \, , \, I_o \leq r \leq L_o \, , \ r = |r| \, .$$

Der Brechungsindexstrukturparameter $C_n^2$ ist ein Maß für die Stärke der Brechungsindexfluktuationen mit der Einheit [$m^{-2/3}$]. Sein Wert variiert von $10^{-17}$ bzw. weniger bei extrem schwachen Turbulenzen bis zu $10^{-12}$ bei sehr starken Turbulenzen, nahe am Boden und in Wirbelschleppen. Der Zusammenhang zwischen $C_n^2$ und den Temperaturfluktuationen kann mit:

$$C_n^2 = |dn/dT|^2 \, C_T^2 = (79 \times 10^{-6} \, (P/T^2))^2 \, C_T^2$$

dargestellt werden, wobei $C_T^2$ den Temperaturstrukturparameter bezeichnet.

Gemäß der Erfindung wird das Wirbelfeld durch einen aufgeweiteten gepulsten Laserstrahl vermessen. Für einen Abstand $r = 1$ m und $C_n^2 = 10^{-12} \, m^{-2/3}$ ist in grober Abschätzung die Phasenverschiebung $10^{-6}$ m = 1 $\mu$m oder $2\pi$ bei $\lambda = 0,5$ $\mu$m, d. h. eine mittlere Phasenverschiebung, die nach der Theorie die Bildung von ausgeprägten Speckles bei einer großen Anzahl von Teilwellen mit insgesamt statistisch verteilten Phasenverschiebungen, entlang der Ausbreitungsrichtung des aufgeweiteten Laserstrahles, zur Folge hat.

Bei jeder Begegnung der Teilwellen mit den kleinsten Turbulenzzellen werden sie jedes Mal mit einem Beugungswinkel in der Größenordnung von $\lambda/I_o = 10^{-4}$ rad, (mit beispielsweise $\lambda = 0,5$ $\mu$m und $I_o = 5$ mm) gebeugt, was beim Durchqueren eines längeren Weges durch das Turbulenzfeld zur deutlichen Strahlwanderung und Strahlaufweitung führt.

Ein geringer Teil der Strahlenergie wird an den Luftmolekülen und Aerosolen gestreut, wobei ein Teil des gestreuten Lichtes in Rückwärtsrichtung, d.h. in Richtung zum Sender gelangt. Die Intensität des Rückstreulichtes ist aber über einen Querschnitt des aufgeweiteten Laserstrahles nicht gleichmäßig, sondern wegen der Specklebildung in Inseln hoher und niedriger Intensität aufgebrochen, die die räumlichen und zeitlichen Variationen des Brechungsindexes in der turbulenten Luft wiedergeben.

Gemäß der Erfindung wird daher zum Beispiel vorgeschlagen, den transversalen Verlauf der örtlichen Brechungsindex- Inhomogenitäten bzw. der Speckles, mit einer in Lidar-Systemen üblichen Messgeometrie, bei der ein Lasersender und ein Empfänger am gleichen Ort aufgestellt sind, abzubilden und zu vermessen. Hierbei wird die Rückstreuung eines ausgesandten gepulsten aufgeweiteten Laserstrahles aus der Atmosphäre aufgenommen und die räumliche und zeitliche Verteilung ihrer Intensität ausgewertet. Zur Abbildung kann zum Beispiel ein elektronisches Kamerasystem als Empfänger verwendet werden, das den dreidimensionalen Intensitätsverlauf des rückgestreuten Lichtes im ausgesandten, aufgeweiteten, gepulsten Laserstrahles aus einer definierten Messentfernung in festen Zeitabständen periodisch aufnimmt und auswertet.

Die Messung wird bevorzugt in Rückwärtsrichtung, d.h. in Reflexion durchgeführt. Weiterhin wird im Sinne der Erfindung ein zeitaufgelöster Messvorgang bevorzugt, bei dem aus der Abbildung des Speckle- bzw. des Strömungsfeldes eine ausgedehnte Messfläche mit begrenzter Dicke in einer festen Entfernung vom Messsystem erfasst wird. Dadurch können mit Hilfe der Speckleabbildung Wind-, Turbulenzfelder und Wirbelschleppen in klarer Luft in größerer Entfernung in einzelnen "Luftscheiben" sichtbar gemacht werden.

Das erfindungsgemäße Lidar-System zur Messung von Luftturbulenzen ist insbesondere für Luftfahrzeuge geeignet und umfasst einen Laser zur Aussendung eines gepulsten, aufgeweiteten Laserstrahls vorgegebener Wellenlänge in einen Raumbereich, einen Detektor zur Messung der Intensitätsverteilung im Querschnitt des aus dem Raumbereich zurückgestreuten Lichts zu einem ersten Zeitpunkt t1 und zu einem zweiten Zeitpunkt t2 nach Aussenden eines Laserpulses, eine Synchronisationseinheit, die den Detektor an den Laser koppelt, um die Messung zu den Zeitpunkten t1 und t2 zu veranlassen, und eine Auswerteeinheit, die aus einem Vergleich der gemessenen Intensitätsverteilungen eine Luftturbulenz ermittelt.

Mit dem erfindungsgemäßen Lidar-System können Luftturbulenzen und Wirbelschleppen vorausfliegender Flugzeuge auch bei klarem Wetter gemessen werden. Darüber hinaus kann das erfindungsgemäße Lidar-System sehr kompakt ausgestaltet werden, womit es zum Einsatz an Bord von Flugzeugen geeignet ist.

Bevorzugt ist der Detektor zur Bestimmung der Position von Speckles ausgestaltet, die bei der Rückstreuung des Laserpulses an Luftmolekülen entstehen, und die Auswerteeinheit ist insbesondere zum Vergleich von Specklemustern ausgestaltet, um daraus die Luftturbulenz zu bestimmen.

Vorteilhafterweise umfasst der Detektor mindestens eine Kamera, welche die Intensitätsverteilungen zu den beiden Zeitpunkten t1 und t2 bei einer definierten Belichtungsdauer aufnimmt, wobei die Auswerteeinheit aus den entstehenden Bildern beispielsweise eine bildliche Darstellung der Brechungsindexvariation im Messfeld erzeugt. Dadurch können Luftturbulenzen für die Besatzung von Luftfahrzeugen sichtbar gemacht werden.

Das erfindungsgemäße abbildende Lidar-System macht den dreidimensionalen Bewegungsablauf von Luftturbulenzen in klarer Luft messbar bzw. sichtbar. Dies erfolgt durch Aufnahme des zurückgestreuten Lichtes aus der Querschnittsfläche des gepulsten, aufgeweiteten Laserstrahls, der die Turbulenzen durchquert und dadurch in Specklemuster aufgebrochen ist, mit Hilfe eines elektronischen Kamerasystems, das mit dem ausgesandten Puls synchron geschaltet ist.

Das Lidar-System ist z. B. auch als ein stationäres Boden-Messsystem geeignet.
In diesem Fall können beispielsweise bestimmte Bereiche von Flughäfen gezielt auf Wirbelschleppen bzw. Luftturbulenzen überwacht werden, beispielsweise der Start- und Landebahnen. Durch die Erfindung wird der Ort der Wirbel ausreichend genau vermessen, so dass Piloten von Luftfahrzeugen den Wirbeln ausweichen können. Insbesondere ist es möglich, das Messsystem an die Flugregelung zu koppeln, so dass beim Auftauchen einer Luftturbulenz in Flugrichtung ein direkter Eingriff in die Flugregelung erfolgt. In diesem Fall kann auch eine direkte Begegnung des Luftfahrzeugs mit der Wirbelschleppe erfolgen. Ähnlich wie bei einem Fahrerassistenz-System in Fahrzeugen werden bei einer derartigen Ausgestaltung der Erfindung die Einflüsse der Wirbel auf die Flugbewegungen zumindest teilweise automatisch ausgeregelt, wodurch Gefahrensituationen vermieden werden.

Neben dem Einsatz im Luftverkehr kann die Erfindung auch für andere Messaufgaben eingesetzt werden, insbesondere zur Vermessung von Luftströmungen und Luftturbulenzen bei klarem Wetter im Bereich von Windfarmen.

Durch die monostatische Anordnung des Lidar-Systems, bei der sich Sender bzw. Laser und Empfänger bzw. Detektor oder Kamera am gleichen Ort befinden, kann die Messung der Luftturbulenzen aus einer sich bewegenden Messanordnung, insbesondere vom Flugzeug aus, durchgeführt werden. Aber auch für Messungen vom Boden aus, beispielsweise am Flugfeld oder in einer Windfarm, bietet die monostatische Anordnung den Vorteil, dass der Sende- und Empfangsstrahl in einem Gerät gemeinsam ausgerichtet werden können, was insbesondere bei mobilen Einsätzen von erheblichem Vorteil ist.

Zur Beherrschung dieser neuen Verhältnisse, der neuartigen Anordnung zwischen Sender-Empfänger, der größeren Entfernung zum Messvolumen und der Bewegung des Messgerätes schlägt die Erfindung folgende Ausführungen vor:

Bevorzugt wird der Sendestrahl koaxial zum Empfangsstrahl aufgeweitet, um eine größere Fläche des Messvolumens in der anvisierten Messentfernung, d.h. einen größeren Messwinkel, auszuleuchten, wobei zum Beispiel eine Kamera das gesamte Specklefeld des Messvolumens gleichzeitig abbildet. Dadurch entfällt das serielle Abtasten des Messvolumens.

Durch die Inhomogenitäten der Atmosphäre bricht der aufgeweitete Laserstrahl entlang der ganzen Wegstrecke kumulativ in viele einzelne Intensitätsinseln bzw. objektive Speckles auf. Für einen Betrachter der seitlich neben dem Laserstrahl steht und ihm entgegen schaut, erscheinen diese Intensitätsinseln des Querschnitts als lange schmale Leuchtspuren (Filamente) innerhalb des ganzen Strahles. Wenn der ganze Strahl auf eine Leinwand fallen würde, dann würden die Speckles als ein Granulationsfeld innerhalb des Querschnitts des Laserstrahles erscheinen, dessen zeitliche Änderungen einer transversalen Luftbewegung folgen würde. Da aber für die Messung keine Leinwand aufgestellt werden kann, schlägt die Erfindung weiterhin vor, die Atmosphäre selbst als eine Leinwand, d.h. die Rückstreuung aus einer Luftscheibe definierter Dicke, zu verwenden. Da die Verschlusszeit der Kamera auch sehr kurz ist, wird der Bewegungsablauf der Speckles in Momentaufnahmen festgehalten.

Die Kamera ist zum Beispiel so aufgestellt, dass sie entlang der Achse eines aufgeweiteten gepulsten Laserstrahles gerichtet ist. Ein schneller Zeitverschluss der Kamera kann dazu verwendet werden, diese "Atmosphären-Leinwand" einer bestimmten Dicke in einer eingestellten Entfernung als eine "Licht-Echo-Wand" der Speckle festzulegen. Nach einer gewissen Laufzeit des Pulses, der dem zweimaligen Lichtabstand zu der Wand entspricht, wird der Kameraverschluss geöffnet und kurz darauf geschlossen, wobei das Belichtungsintervall dann der Dicke der Reflexionswand entspricht. Was abgebildet wird, ist für jeden Puls das momentane Abbild der Intensität der Speckle, nicht nur auf dem Hinweg zur Reflexionswand, sondern auch auf dem Rückweg von der Wand zum Empfänger. Zusätzlich entstehen durch die Lichtbeugung und Abbildung des optischen Empfangssystems vor der Kamera and ihrer Aufnahmeapertur sogenannte subjektive Speckles, die den objektiven Speckles im Bild der Kamera überlagert sind.

In klarer Luft ist der Einzelstreuprozess vorherrschend, d.h. der Anteil von mehrfach gestreuten Photonen ist in Rückstreuung verschwindend klein. Erst bei hoher Aerosoldichte, d.h. im Nebel oder Wolken, ist der Anteil an mehrfach gestreuten Photonen an Aerosolen über längeren Wegstrecken, d.h. erst über mehrere zehn Meter, bemerkbar. Dies bedeutet für die hier betrachteten Messverfahren, dass die Atmosphäre in dünnen Schichten von einigen Metern für die flächenhafte Beleuchtung als eine Art Rückstreuschirm ohne seitliche Verbreiterung durch Mehrfachstreuung das Licht zurückwirft. Die dünnen Atmosphärenschichten können deshalb jeweils als eine Art Leinwand verwendet werden, die Bilder - ohne merkliche Kontrastverminderung durch Seitenstreuung - in Richtung zu dem Projektor zurückspiegelt. Diese von der Atmosphäre rückgestreuten Bilder sind gegenüber Bildern an einer festen Leinwand wegen des geringen Rückstreuvermögens der Luft sehr schwach. Mit der gepulsten kurzwelligen Laserstrahlung und typischen Pulsenergien marktüblicher Laser können jedoch verwertbare Signale aus einer ausgedehnten Schicht über mehrer hundert Meter Entfernung gewonnen werden. Dies soll im folgenden genauer gezeigt werden:

Atmosphärische, objektive Speckles entstehen, wie oben erwähnt, durch ein kumulatives Aufbrechen eines ursprünglich homogenen Laserstrahles entlang seiner Ausbreitungsrichtung in Intensitätsflecken d.h. in eine starke Intensitätsmodulation durch Interferenz der Teilwellen auf Grund von Brechungsindexunterschieden der Luft und Streuung an Aerosolen über den gesamten Strahlquerschnitt. Die Intensitätsmodulation und Größe der Speckles sind statistisch verteilt und hängen von dem Refraktions-Turbulenz- Strukturparameter $C_n^2$ bei den jeweiligen Wetterverhältnissen ab. Dieser Parameter wird sowohl durch Druck- als auch Temperaturunterschiede in Wirbeln beeinflusst, wobei der Temperatureinfluss auf den Brechungsindex, wie vorhin erwähnt wurde, der größere ist. Der mittlere Durchmesser $d_o$ der Speckle ist bei relativ ruhiger Luft $d_o = (\lambda\, z)^{1/2}$, wobei $\lambda$ die Laserwellenlänge und z den Abstand von der Laserquelle bezeichnet. Bei $\lambda = 0{,}267\ \mu m$ und $z = 100m$ wäre z. B. der mittlere Durchmesser $d_o = 5$ mm, aber wegen ihrer statistischen Größenverteilung ist mit dem Vorhandensein sowohl von wesentlich größeren als auch kleineren Speckles zu rechnen.

Die Speckles, die sich nach Verlassen des gepulsten Laserstrahles aus dem Lidar bis zu einer vorher definierten Schicht in einer bestimmten Entfernung über den Strahlquerschnitt ausgebildet haben, werden durch die homogenen Rückstreueigenschaften der Luftmoleküle ohne eine störende Seitenverbreiterung als objektive Specklegranulation, d.h. als eine ausgeprägte Intensitätsverteilung in der Rückstreuung an dieser Schicht sichtbar, und können durch die Kamera, die hinter dem Empfangsteleskop angebracht ist, abgebildet werden. Bei einem typischen Abbildungsfaktor von 1/100 und einem ursprünglich mittleren Durchmesser der Speckles von 5 mm, ist ihr Durchmesser in der Brennebene des Teleskops dann 50 $\mu$m, was dem Fünffachen des typischen Pixeldurchmesser einer CCD-Kamera von 10$\mu$m entspricht.

Zusätzlich zu den objektiven Speckles entstehen an der Empfangsapertur selbst statistisch verteilte Welleninterferenzen, die subjektiven Speckles mit einem unteren Grenzwert des Durchmessers von $d_s = 1.2\,\lambda\ f/D$ bilden, wobei $D$ den Durchmesser der Empfangsapertur bezeichnet. Mit $\lambda = 0{,}267\ \mu$m und einer $F$-Zahl der Empfangsoptik von $F = f/D = 10$ ist dann $d_s = 3{,}2\mu$m oder gleich dem Bild eines fernen Aerosols. Hier handelt es sich bei den subjektiven Speckles aber um einen unteren Grenzwert, wobei größere Speckle mit größerer Häufigkeit auftreten. Insgesamt sind sie deutlich kleiner als die objektiven Speckles und fallen damit bei der Bildauswertung nicht ins Gewicht.

Zur Abbildung von Speckles aus nur einer bestimmten Messentfernung wird die aufnehmende Kamera bevorzugt mit einer Zeitintervallschaltung ausgerüstet, die nur das Licht nach einer gewissen Laufzeit des ausgesandten Laserpulses aufnimmt und nach einem kurzen Intervall wieder schließt. Dieses Verfahren der Entfernungseinstellung durch Pulslaufzeitmessung ermöglicht die zeitlich begrenzte Bildaufzeichnung des Messortes (gated viewing), d.h. die Bildaufnahme der Rückstreuung (Echo) aus einer Luftscheibe mit definiertem Durchmesser und Dicke entlang der optischen Achse aus einer über die Pulslaufzeit einstellbaren festen Entfernung.

Je nach dem, ob die Inhomogenität des Brechungsindexes bzw. der Temperatur in der momentanen Luftunruhe oder ihre Geschwindigkeitsverteilung erfasst werden soll, umfasst die Erfindung bevorzugt zwei unterschiedliche Aspekte: *A* Vermessung des Specklebildes an unterschiedlichen Orten entlang der gleichen Messachse zur gleichen Zeit, und *B* die zweimalige Messung der Specklebilder wie bei *A* in definierten kurzen Zeitabständen. Bei *A* wird der Brechungsindexgradient $\Delta n/\Delta r\ (x, y)$ und bei *B* seine zeitliche Änderung $\Delta n/\Delta r\Delta t\ (x, y)$ aufgenommen.

Gemäß einem dritten Aspekt *C* der Erfindung wird, alternativ zu der Verwendung von Speckles als Messsonde für die Abbildung der momentanen Luftunruhe bzw. der Luftbewegung, ein räumlich modulierter Laserstrahl (strukturiertes Laserlicht) verwendet. Dabei kann zusätzlich bzw. alternativ zu der Specklevermessung sowohl die Brechungsindexvariationen $\Delta n/\Delta r\ (xy)$ als auch ihre zeitliche Veränderung $\Delta n/\Delta r\Delta t\ (x,y)$ mit Doppelpulsen und Doppelbelichtung dargestellt werden.

AUSFÜHRUNGSBEISPIELE

Nachfolgend wird die Erfindung beispielhaft anhand der Zeichnungen beschrieben, in denen

Fig. 1    ein Lidar-System zur Messung von Luftturbulenzen gemäß einer ersten bevorzugten Ausführungsform der Erfindung zeigt;

Fig. 2    ein Lidar-System zur Messung von Luftturbulenzen gemäß einer zweiten bevorzugten Ausführungsform der Erfindung zeigt;

Fig. 3    ein Lidar-System zur Messung von Luftturbulenzen gemäß einer dritten bevorzugten Ausführungsform der Erfindung zeigt;

Fig. 4    eine Bilddarstellung einer Wirbelstruktur zeigt, wie sie mit dem erfindungsgemäßen Verfahren und Lidar-System erzeugt wird, wobei eine radiale Bildverzerrung durch die Eigenbewegung des Luftfahrzeugs mit dem Messsystem an Bord erfolgt;

Fig. 5    einen holografischen Strahlteiler zeigt, der den Messstrahl gemäß einer bevorzugten Ausführungsform der Erfindung in einzelne, diskrete Messstrahlen aufteilt; und

Fig. 6    eine beispielhafte Überlagerung von diskreten, kreisförmigen Messfeldern auf einer Wirbelstruktur zeigt.

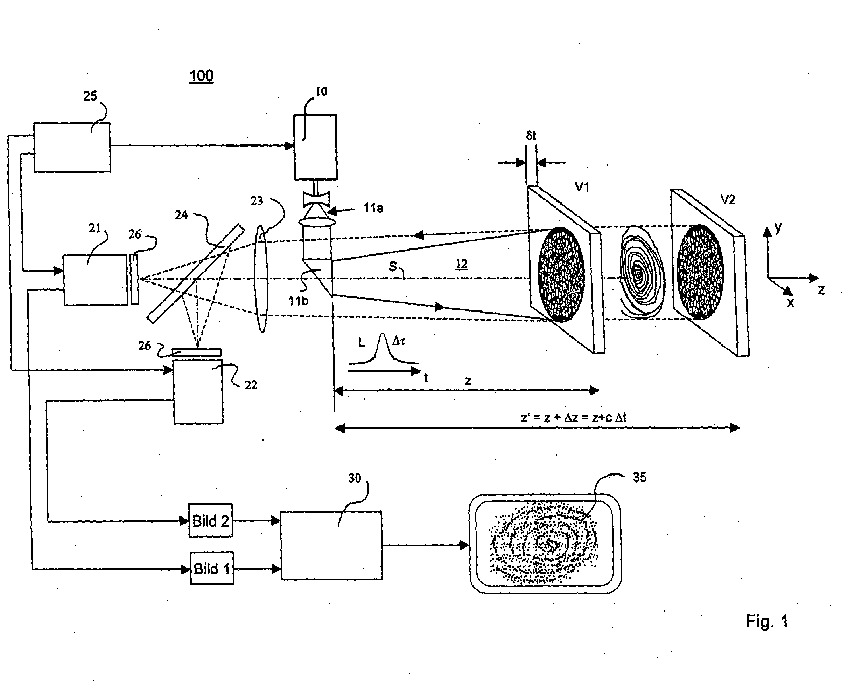

Figur 1 zeigt ein Lidar-System 100 zur Erfassung und Vermessung von Luftturbulenzen gemäß einem ersten bevorzugten Ausführungsbeispiel. Das erfindungsgemäße Lidar-System umfasst einen Laser 10, der über eine Optik 11 mit einer Linsenanordnung 11a und einem Umlenkspiegel 11 b einen gepulsten, aufgeweiteten Laserstrahl 12 vorgegebener Wellenlänge in einen Raumbereich aussendet. Eine Detektoreinrichtung 21, 22 dient zur Messung der Intensitätsverteilung im Querschnitt des aus dem Raumbereich zurückgestreuten Lichts, wobei die Messung zu einem ersten Zeitpunkt t1 und zu einem zweiten Zeitpunkt t2 nach Aussenden eines Laserpulses L erfolgt. Eine Synchronisationseinheit 25 koppelt die Detektoreinrichtung mit den beiden Detektoren 21, 22 an den Laser 10. Die Synchronisationseinheit 25 steuert die Detektoren 21, 22 derart an, dass zu den beiden Zeitpunkten t1 und t2 nach Aussenden des Laserpulses L jeweils eine Messung erfolgt. Eine Auswerteeinheit 30 vergleicht die mit den Detektoren 21, 22 gemessenen Intensitätsverteilungen, um aus dem Vergleich eine Luftturbulenz zu ermitteln. Die Auswerteeinheit 30 ist elektronisch an ein Bilddarstellungssystem bzw. einen Monitor 35 gekoppelt, um die so ermittelte Luftturbulenz als Bild darzustellen.

Bei der Messung wird ein Laserpuls L gesendet, wobei der Laserpuls L auf seinem Weg die Luft durchdringt und dabei an Luftmolekülen und Aerosolen gestreut wird. In Figur 1 sind zwei Messvolumina V1 und V2 gezeigt, die entlang der gemeinsamen Strahlachse S liegen und räumlich voneinander getrennt sind. Über ein Empfangsteleskop 23 und einen Strahlteiler 24 gelangt das aus den beiden Messvolumina V1 und V2 zurückgestreute Laserlicht zu den Detektoren 21 bzw. 22. Die Entfernung z des ersten Messvolumens V1 wird durch den Zeitpunkt t1 nach Aussenden des Laserpulses L bestimmt, an dem die Detektion des zurückgestreuten Lichts mit dem Detektor 21 erfolgt. Die Entfernung des zweiten Messvolumens V2 wird durch den Zeitpunkt t2 nach Aussenden des Laserpulses L bestimmt, an dem die Detektion des zurückgestreuten Lichts durch den zweiten Detektor 22 erfolgt.

Als Detektoren 21, 22 dienen Kameras, welche die Streusignale aus den Messvolumina V1 und V2 aufnehmen. In dem dargestellten Beispiel werden zwei identische Bildverstärkerkameras verwendet, die mit einem Strahlteiler eine gemeinsame Aufnahmeachse teilen und deren Belichtungszeiten synchron mit der Aussendung des Laserpulses mittels einer Zeitintervallschaltung so eingestellt werden, dass sie Lichtsignale entlang der Achse bzw. Strahlachse S aus den räumlich getrennten Messvolumina V1 und V2 aufnehmen. Durch die Aufnahme mit zwei getrennten Kameras können die Streusignale aus den verschiedenen Messvolumina V1 und V2 zeitlich auseinandergehalten werden, obwohl die Laufzeit des Laserpulses L zum ersten bzw. zweiten Messvolumen und zurück extrem gering ist. Es ist aber auch möglich, eine einzelne Kamera zu verwenden, deren Schnelligkeit ausreicht, die Streusignale aus den beiden hintereinanderliegenden Messvolumen V1 bzw. V2 voneinander zu trennen.

Im hier dargestellten Beispiel wird als Laser 10 ein Einzelpulslaser verwendet, der Laserpulse L mit einer Pulsdauer $\Delta\tau$ verwendet.

Als Detektoren 21, 22 dienen in dem gezeigten Beispiel CCD Bildverstärkerkameras mit jeweils einem vorgeschalteten Bildverstärker in Form einer Multi-Channel-Plate 26 (MCP). Die MCP 26 hat zwei Aufgaben. Die erste Aufgabe der MCPs ist es, mit Hilfe des Prinzips des Photovervielfachers den schwachen Photoelektronenstrom des Lichtsignals aus der Photokathode in einer mit Mikrokanälen versehenen Platte zu verstärken, bevor er anschließend auf einen Phosphorschirm gelangt, wo er mit einem CCD-Array registriert wird. Die zweite Aufgabe der MCP 26 ist es, durch Einschalten seiner Verstärkerspannung in der Zeit $t1 = 2t_o$ nach Aussenden des Laserpulses $(t = 0)$ die Kamera 21 auf den Empfang der Rückstreusignale zu schalten, und nach $t1\varepsilon = 2(t_o + \delta t)$ wieder auszuschalten.

Analog dazu schaltet die MCP 26 der zweiten Kamera 22 auf Empfang bei $t2 = 2(t_o + \Delta t)$ und schließt sie wieder bei $t2e = 2(t_o + \Delta t + \delta t)$. Dabei bezeichnet 2 x $\Delta t$ den Zeitabstand der beiden Aufnahmen und 2 x $\delta t$ die jeweilige

gleiche Belichtungsdauer der beiden Kameras 21, 22. Mit der Lichtgeschwindigkeit c ist $\Delta z = c\,\Delta t$ der Abstand der beiden Messschichten, mit der Dicke $\delta z = c\,\delta t$.

Die Bilder 1 und 2 der beiden CCD-Kameras 21, 22 zeigen jetzt die Speckles nach den Pulslaufzeiten $2(t_o + \delta t)$ und $2\,(t_o + \Delta t + \delta t)$, die entlang des Messweges entstanden sind. Sie sind zusammengesetzt aus den objektiven Speckles auf dem Weg zu den rückstreuenden Schichten V1 und V2 und zurück, und den subjektiven Speckles des Empfangssystems. Nun wird eine Kreuzkorrelation (im einfachsten Falle eine Subtraktion) zwischen beiden Bildern gemacht. Das Ergebnis ist eine Bilddarstellung der Brechungsindexvariationen alleine entlang des Messfeldes zwischen den beiden Schichten V1 und V2, die z. B. aus einem Wirbel besteht. Da die atmosphärischen Einflüsse über die gemeinsamen Laufstrecken gleich sind, fallen sie bei der Kreuzkorrelation weg, und es bleibt nur der Einfluss des Anteils zwischen den beiden Schichten übrig.

Wie oben diskutiert wurde, spiegelt diese Brechungsindexvariation im wesentlichen die Temperatur-Inhomogenitäten der Verwirbelung wieder. Da diese aber kontinuierlich aus der kinetischen Energie der bewegten Luft erzeugt wird und gleichzeitig durch Wärmediffusion und Konvektion aus den Wirbeln wieder verschwindet, ist dieses Temperaturfeld ein Gradmesser über die noch bestehende Struktur der Verwirbelung.

Durch die Verwendung von periodisch emittierten Laserpulsen (z. B. 10Hz) mit einem Zeitabstand $\tau$ können zum Beispiel bei einer typischen Landegeschwindigkeit eines Flugzeugs von 100m/s Schnittbilder der Verwirbelung mit einem Abstand von z.B. 10m gewonnen werden. Mit einer typischen Schaltzeit der Kameras von 2 x $\delta t$ = 20ns würde die atmosphärische Leinwanddicke dann $\delta z$ = 3 $m$ betragen. Der Schichtabstand *V1 zu V2* wird in diesem Falle z. B. gleich der Strecke, die das Flugzeug zwischen zwei Pulsen fliegt, $\Delta t$ = 10m gewählt. Es versteht sich aber, dass alle Parameter, wie z.B. die Messzeit $\delta t$, die Zeit zwischen den Laserpulsen $\tau$ und der Zeitabstand zwischen den beiden Aufnahmen der Kameras 2 x $\Delta t$, innerhalb gewissen Grenzen frei wählbar sind und z. B. an die Flugzeuggeschwindigkeit und erwartete Wirbelgeschwindigkeit und angestrebte Auflösung der Messung angepasst werden können.

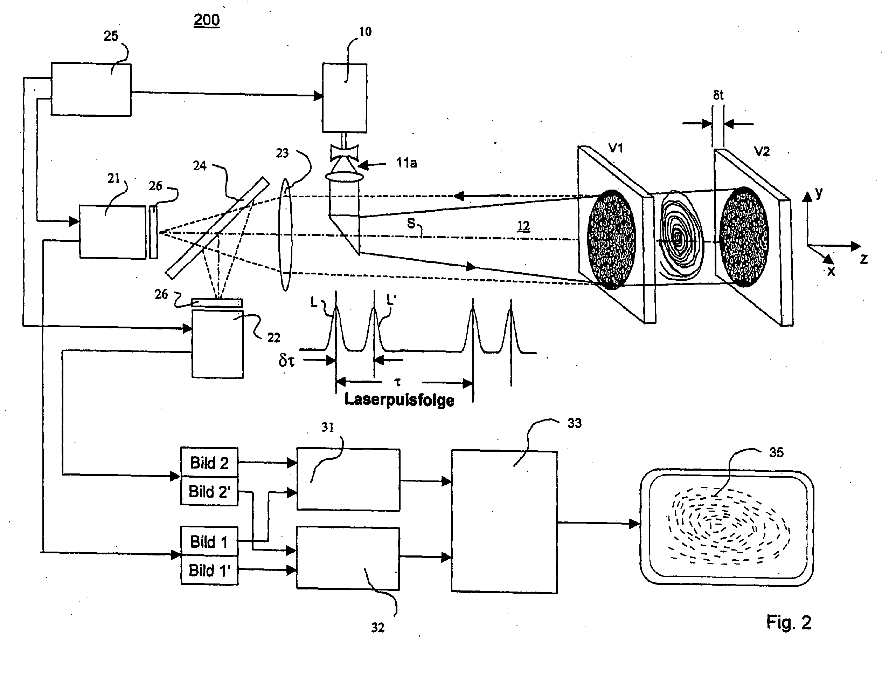

Figur 2 zeigt ein Lidar-System 200 gemäß einer zweiten bevorzugten Ausführungsform der Erfindung, mit dem eine Darstellung der zeitlichen Entwicklung der Wirbel möglich ist. D.h., es kann nicht nur die momentane bzw. zeitlich gefrorene Inhomogenität der Luft angezeigt werden, sondern es wird ein direktes Abbild des Geschwindigkeitsfeldes der turbulenten Luft gewonnen. Bauteile und Elemente des in Figur 2 dargestellten Lidar-Systems, die im wesentlichen die gleiche Funktion besitzen, wie bei dem in Figur 1 dargestellten System, sind mit denselben Bezugszeichen wie in Figur 1 gekennzeichnet.

Bei dem in Figur 2 dargestellten Lidar-System wird anstelle eines einzigen Laserpulses jeweils ein Impulspaar mit einem Zeitabstand von $\delta\tau$ ausgesandt. Auf dem Markt sind Laser erhältlich, die solche Doppelpulse mit einstellbarem Zeitabstand (z. B. 1-30ms, meistens zwei synchron Q-geschaltete Laser), emittieren. Die entsprechenden Bildverstärkerkameras, die zwei Bilder in sehr kurzen variablen Zeitabständen aufnehmen und abspeichern können, sind ebenso verfügbar.

Dabei sind die Detektoren 21, 22 als Doppelbelichtungskameras ausgestaltet, und der Laser 10 ist als Doppelpulslaser ausgestaltet.

Mit der Kombination von Doppelpulslaser 10 und Doppelbelichtungskameras 21, 22 kann nun durch den ersten Laserpuls L zuerst eine Kreuzkorrelation der Bilder 1 und 2 aus den Messvolumina V1 und V2 erfolgen, und anschließend erfolgt eine Kreuzkorrelation der Bilder 1' und 2', die mit dem zweiten Laserpuls L' aus denselben Messvolumina V1 und V2 aufgenommen werden. Aus den so gewonnenen Doppelbildern der Turbulenzbewegung zu unterschiedlichen Zeiten werden nach einer zweiten Korrelation der Speckleverschiebung die Geschwindigkeiten in der Luftbewegung dargestellt. Ist z.B. der Zeitabstand der Doppelpulse 1 ms und die Luftgeschwindigkeit im Wirbel 50m/s, haben sich die Speckle um 50mm weiterbewegt. Mit einem Abbildungsverhältnis 1/100 entspricht dies einer Verschiebung von 500$\mu$m in der Brennebene der Kamera mit einem Pixelabstand von 10$\mu$m.

Zur Korrelation der Bilder 1 und 2, die mit dem ersten Puls L aufgenommen werden, dient ein Korrelator 31, und zur Korrelation der Bilder 1' und 2', die mit dem zweiten Puls L' aufgenommen werden, dient ein Korrelator 32. Ein weiterer Korrelator 33 dient zur 2. Stufe der Korrelation, bei der durch Korrelation der Ausgangssignale der Korrelatoren 31 und 32 die Geschwindigkeiten der Luftbewegung ermittelt werden.

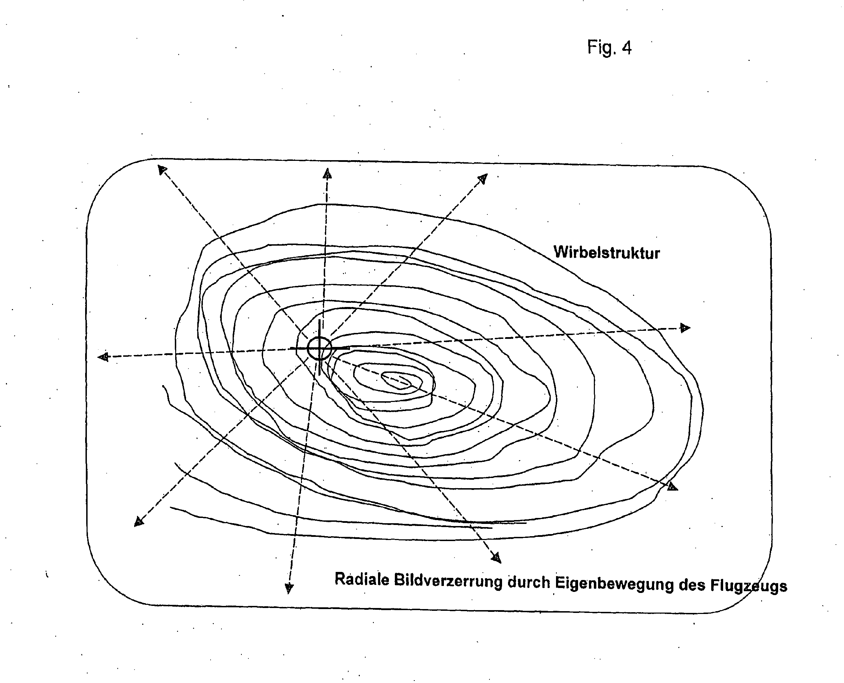

Ein Vorteil der zeitlichen Darstellung der Specklebewegung ist eine gleichzeitige Anzeige der Bewegung der Messachse des Flugzeugs in dem Abbild. In einem Zeitabstand zwischen den beiden Pulsen $\Delta\tau$ = 1 ms, bei einer Flugzeuggeschwindigkeit von $v$ = 100m/s, bewegt es sich vorwärts um 0,1m. Bei einem Ablagewinkel von der Achse von $\varphi$ = 1° hat sich der zugehörige Messpunkt radial von der Bewegungsachse um $\delta r = \tau\,v\,tg\varphi$ = 1,7 mm oder mit 1: 100 Abbildungsverhältnis um 17$\mu$m in der Kameraebene bewegt, was dem 1,7-fachen Pixeldurchmesser entspricht. Aus dem optischen Fluss aus diesem Bewegungszentrum über einige Messreihen werden die Anstell- und Schiebewinkel des Flugzeugs projiziert auf die Messschicht abgeleitet, wie in Fig. 4 dargestellt, was für die Flugregelung von besonderem Nutzen ist.

Anstatt der Verwendung einer Doppelbelichtungskamera besteht die Möglichkeit, vier einzelne Kameras zu verwenden, wobei zwei Kameras dann die Aufnahme der rückgestreuten Lichtsignale der Laserpulse jeweils aufnehmen und alle Kameras mit Hilfe von Strahlteiler auf eine gemeinsame optische Achse gebracht werden.

Bei den in den Figuren 1 und 2 gezeigten Ausführungsformen wird der direkte Laserstrahl als Messstrahl verwendet. Dieser kann am Laser über seinen Querschnitt einen glatten Intensitätsverlauf, z. B. eine Grundmode mit einem Gauss-Profil, darstellen. Der Intensitätsverlauf kann aber in höhere transversale Moden aufgebrochen sein und sich von Puls zu Puls ändern. Dies hat in erster Näherung auf das vorgeschlagene Verfahren keinen Einfluss, denn diese zusätzliche Intensitätsmodulation kürzt sich aus bei der Korrelation der Specklebilder beim gleichen Laserpuls aus unterschiedlicher Entfernungen aus. Es verbleibt nur der Anteil der Speckleänderung auf der Differenzstrecke als Bestandteil der Korrelation.

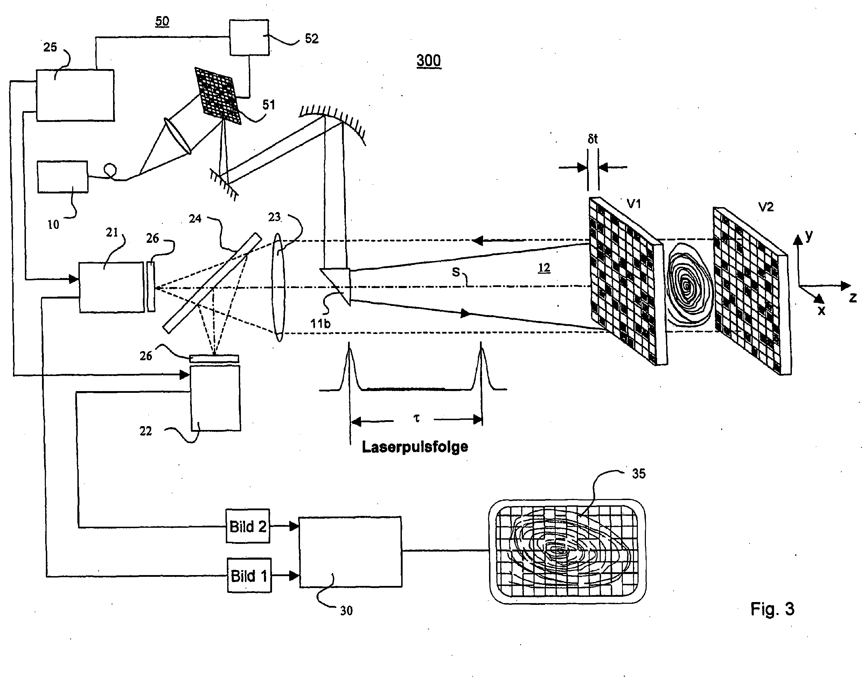

Figur 3 zeigt ein Lidar-System 300, bei dem ein Messstrahl S erzeugt wird, der mit Hilfe eines räumlichen Modulators 50 gleich beim Verlassen des Lidars über seinen Querschnitt in seinem Intensitätsverlauf statistisch durchmoduliert ist. Der Laser 10 sendet dabei Licht an ein Mikro-Display 51, das über einen Zufallsbildgenerator 52 gesteuert wird, um eine statistische Modulierung des Laserstrahls S zu bewirken. Die übrigen Bezugszeichen kennzeichnen Bauteile und Elemente, wie sie oben bereits im Zusammenhang mit den Figuren 1 und 2 beschrieben wurden.

Analog wie in den oben beschriebenen Ausführungsbeispielen von Figur 1 und 2 wird die Bildverschiebung in den Modulationsmustern des rückgestreuten Laserlichts ermittelt und als Maß für die Strahlablenkung in Turbulenzen verwendet. Wie in den Beispielen zu Figur 1 und 2 können dadurch wahlweise die momentane Unruhe der Luft oder die Luftbewegung erfasst werden. Die Verwendung der in Figur 3 gezeigten Ausführungsform ist insbesondere in Fällen geeignet, in denen die Specklebildung nach Durchgang durch Turbulenzen nicht stark ausgeprägt ist, z.B. bei der Verwendung von breitbandigen Laserquellen mit nur sehr kurzer zeitlicher Kohärenzlänge (z.B. Femtosekundenlasern), oder bei räumlich weit ausgedehnten Laserquellen, z.B. nach einem Strahldurchgang durch Faserbündel oder Streuscheiben.

Bei den gezeigten Ausführungsformen bestehen verschiedene Möglichkeiten zur optischen Auslegung des Lidarsystems in Bezug auf Pulsenergie, Pulsabstand, Sendestrahldurchmesser, Sendestrahldivergenz des Lasersenders, Aperturdurchmesser und Brennweite des Empfangsteleskops und Pixelanzahl und Pixeldurchmesser der Kameras. Es besteht auch die Möglichkeit als Sende- und Empfangsteleskope Zoom-Objektive variabler Brennweite zu verwenden.

Da die Messobjekte bzw. die einzelnen Wirbel nahezu rotationssymmetrisch und das Wirbelpaar axial antisymmetrisch sind, ist es nicht notwendig, die ganze Querschnittsfläche beider Wirbel lückenlos abzubilden, sondern es genügt, nur vereinzelte Teilbereiche, z. B. Messkreise einer bestimmten Anzahl und Durchmesser, über den Querschnitt abzubilden, was eine wesentlich Ersparnis an Laserpulsenergie bedeutet.

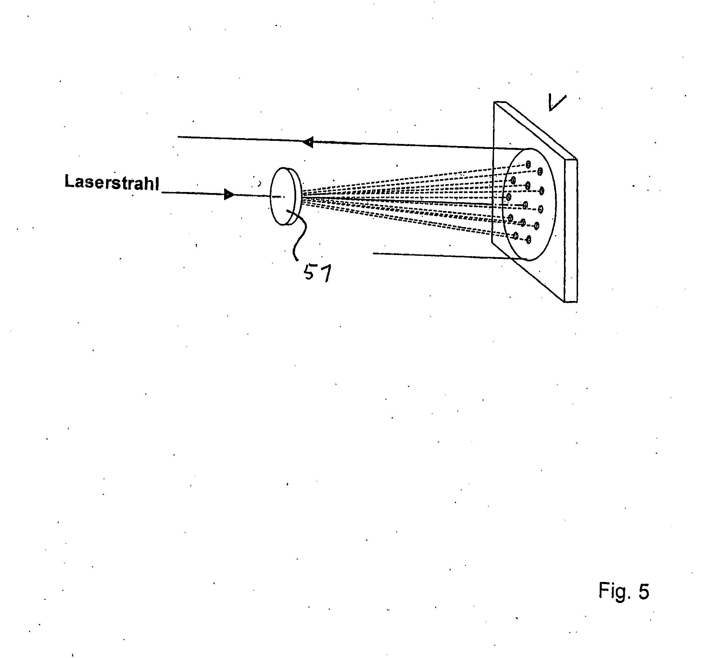

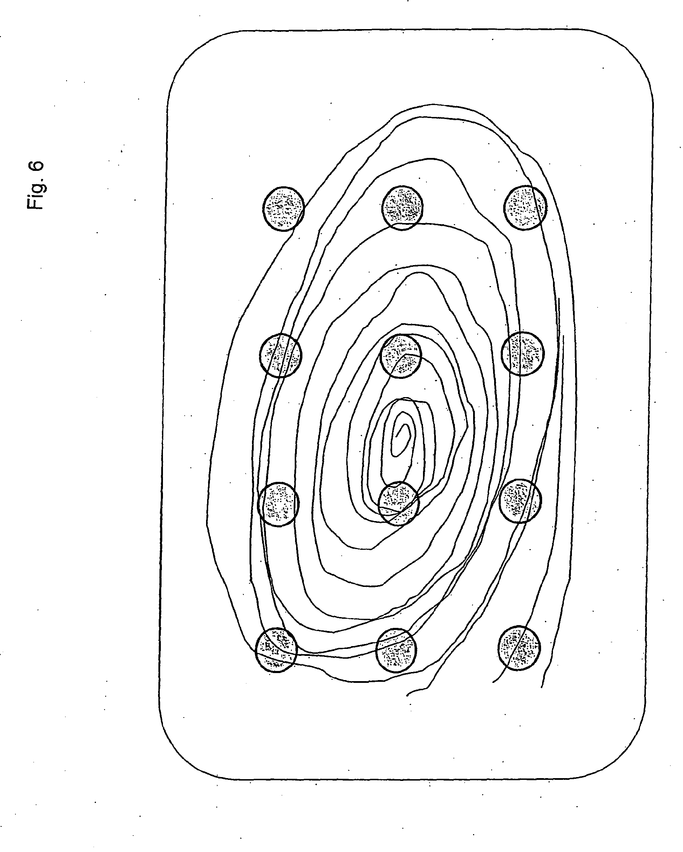

Zu diesem Zweck erfolgt gemäß einer besonderen Ausgestaltung der Erfindung eine Teilung des Messstrahles in einzelne diskrete Messstrahlen mit einem holografischen Strahlteiler bzw. Transmissionsgitter 51, wie in Fig. 5 gezeigt, das einen einfallenden Laserstrahl durch Beugung in eine Anzahl von identischen Teilstrahlen ohne nennenswerte Gesamtverluste aufspaltet. Die Teilstrahlen werden dann an der Atmosphärenschicht V, die das Messvolumen bildet, gestreut bzw. reflektiert. Wie in Fig. 6 dargestellt, erfolgt durch die Aufspaltung eines Strahles in 4x3 Strahlen, eine Ausleuchtung von insgesamt 64 x 48 Pixel in der Brennebene der Kamera, die z. B. eine Gesamtzahl von 640 x 480 Pixel hat. Mit einem Zoomobjektiv als Empfangsteleskop würden die Messkreise je nach Einstellung in der Brennebene anders abgebildet werden. Auch wäre ein Wechsel des holografischen Strahlteilers 51 in eine unterschiedliche Anzahl von Messkreisen je nach Messentfernung möglich.

Voraussetzung der Erfindung ist, dass die Stärke der von der Atmosphäre zurückgestreuten Lichtsignale eines aufgeweiteten gepulsten Laserstrahles für Kameraaufnahmen der Speckle aus einer definierten Luftschicht in einer bestimmten Messentfernung ausreicht. Dies soll im nachfolgenden gezeigt werden.

Die Rückstreuung geschieht an Luftmolekülen und Aerosolen, wobei für die Speckleabbildung die molekulare Streuung wegen ihrer Kontinuität wichtiger ist. Die Intensität der Molekülstreuung nimmt zu kürzeren Wellenlängen proportional zu $\lambda^{-4}$, der Aerosolstreuung proportional zu $\lambda^{-1,3}$ zu, d.h. es ist günstiger, die Streuung mit möglichst kurzen Wellenlängen, d.h. im UV aufzunehmen. Da der Quantenwirkungsgrad der Photokathoden von CCD-Kameras mit vorgeschalteten mehrkanaligen Bildverstärkern (image intensified multi-channel plate CCDcameras), die hier geeignet sind, auch sehr hoch ist (30-40%), wird vorgeschlagen, Laserwellenlängen im UV-Bereich von 230nm bis 400nm zu verwenden. Hier kommen mit der heutigen Technik z. B. der frequenzvervierfachte oder -dreifachte Nd:YAG-Laser mit den Wellenlängen 266nm und 355nm in Frage.

Ein weiterer Vorteil von Wellenlängen unter 400nm liegt darin, dass hier die Lasersicherheitsregelungen eine um etwa $10^4$ höhere Pulsenergie zulassen als oberhalb von 400nm. In dem Wellenlängenbereich von etwa 220nm bis 295nm (Hartley-Band) kommt der weitere Vorteil hinzu, dass die Sonneneinstrahlung wegen der Absorption der Ozon-Schicht in 25-50km Höhe auf ein unmerklich geringes Maß (solar blind region) gesunken ist, obwohl die Transmission der Atmosphäre über mehrere Hundert Meter kaum beeinträchtigt ist, was die Messung sehr schwacher Lasersignale, bei starkem Sonnenhintergrund, erheblich erleichtert.

Die Anzahl der empfangenen Photonen der Rückstreuung $N_P$ in Abhängigkeit der ausgesandten $N_O$, von dem Volumen-Rückstreukoeffizienten $\beta$, dem atmosphärischen Dämpfungskoeffizienten $\alpha$, der Entfernung z und der Aperturfläche A des Empfangsteleskops, $T_O$ der optischen Transmission des Lidarsystems , wobei c die Lichtgeschwindigkeit, $\tau$ die Messdauer bezeichnet, lässt sich durch die bekannte Lidar-Gleichung berechnen:

$$N_P = N_o \, (c\tau) \; \beta \, A/z^2 \, T_o \; \exp(- \, 2 \int_o^z \alpha \, dz)$$

oder die Anzahl $N_E$ der Photoelektronen der Kamera bezogen auf die Pulsenergie $E_o$ mit $N_o = E_o \, (\lambda/hc)$, wobei h die Plancksche Konstante, $\lambda$ die Wellenlänge und Q den Quantenwirkungsgrad der Photokathode bezeichnet, mit:

$$N_E = E_o \, (\lambda/hc) \, (c\tau) \; \beta \, A/z^2 \, T_o \; \exp(- \, 2 \int_o^z \alpha \, dz)Q$$

Im Nachfolgenden werden einige Ausführungs- und Zahlenbeispiele für ein Einsatzgebiet eines Lidarsystem im Sinne der Erfindung aufgeführt.

$\beta$ = 2,5 x $10^{-5}$ $m^{-1}$ $sr^{-1}$ molekularer Volumen Rückstreukoeffizient der Atmosphäre in Bodennähe bei $\lambda$ = 0,266$\mu$m
$z$ = 100m Entfernung zum Messvolumen
$A$ = 3 x $10^{-2}$ $m^2$ Aperturfläche eines Empfangsteleskops mit D = 20 cm Apertur
$\tau$ = 10 ns Messdauer mit einer Schichtdicke von $C\tau$ = 3m
$T_o$ = 0,4 als Gesamttransmission der Optik
Q = 0,3 Quantenwirkungsgrad der Photocathode
$exp.()$ = 0,8 Transmission der Atmosphäre bis 100m Messentfernung
$E_o$ = 1 mJ
N = 2 x $10^4$ Photoelektronen pro mJ Laserpulsenergie

Mit einer Pixelanzahl 64 x 48 und 50 mJ Pulsenergie würden dann 325 Photoelektronen zur Beleuchtung eines einzelnen Bildpixels anfallen, was als mittlere Pixelausleuchtung vollkommen ausreicht. In anderen praktischen Fällen könnten die Werte gegenüber den hier angenommenen deutlich abweichen.

In der Kombination mit schnell schaltbaren und empfindlichen Kameras wird vorzugsweise ein Laser im UV-Bereich und eventuell im sichtbaren Bereich eingesetzt werden. Für die Erzeugung von den typischen Laserpulsen mit einer Dauer von 5ns-20ns eignen sich heute am besten Festkörperlaser wie z. B. Nd:YAG-Laser bei ihrer Grundwellenlänge 1,064 $\mu$m, frequenzverdoppelter Emission bei 0,53$\mu$m im Sichtbaren und verdreifachter Emission bei 0,355$\mu$m oder vervierfachter Emission bei 0,266$\mu$m im UV mit einer entsprechenden Auswahl von Photokathodenmaterialien der Kamera, die auch alle auf dem Markt erhältlich sind. Doppelpulslaser dieser Art mit einer kontinuierlichen Einstellung des Pulsabstandes von 1 bis 20 ms sind auf dem Markt ebenso erhältlich.

Die Messung von Turbulenzfeldern am Boden in einer Windfarm und am Flughafen bzw. aus einem Flugzeug gekoppelt mit der Flugregelung wird typisch in einer Messentfernung von 50m bis 200m eingesetzt. Die geforderte Messentfernung kann mit 100m als typisch angenommen werden, die notwendige Aufweitung des Laserstrahles zur Ausleuchtung einer Fläche beträgt einige Grad, die axiale Länge des erwünschten Messvolumens 3m (entsprechend einer Messdauer von 10ns, die Pulswiederholfrequenz des Lasers und Bildfolgefrequenz der Kamera 10-20Hz. Die angestrebte Messauflösung der Geschwindigkeit im Luftwirbel liegt im Bereich von 1m/s, die typische Bildauflösung im VGA-Format oder 640 x 480 Pixel, mit einem Pixeldurchmesser der Kamera von 10$\mu$m.

Ein Sendeteleskop wird zur Aufweitung des Laserstrahles und ein Empfangsteleskop zum Empfang des rückgestreuten Lichtes aus der Atmosphäre mit parallelen optischen Achsen so wie üblich bei Lidar-Systemen verwendet. Resultate von numerischen Berechungen und Messungen zeigen, dass eine Pulsenergie des Sendestrahles von 20-100 mJ pro Puls in der klaren Atmosphäre für ausreichendes Signal-Rausch-Verhältnis im rückgestreuten Bild genügt, z. B. für die Anzahl von 100 x 100 Pixel.

Zum Erreichen einer größeren Reichweite, z. B länger als 1000 m (Entfernungs-Vergrößerung von 100m auf 1000m bedeutet einen Faktor 100 an Verminderung der Signalstärke), kann z. B. die Pulsenergie erhöht werden, bzw. die Messdauer, d.h. die Dicke der rückstreuenden Schicht, entsprechend länger gewählt werden. Für größere Reichweiten kann auch die Anzahl der beleuchteten Pixel erheblich reduziert werden.

Bei einem Abbildungsverhältnis von 1:100 des Empfangsteleskops, beträgt die Pixelgröße in 100m Entfernung 1 mm, und der Weg eines Partikels mit 1m/s von Aufnahme zu Aufnahme bei einem Zeitabstand der Pulse von 1 ms beträgt 1m/s x $10^{-3}$ s = 1 mm oder 1 Pixel, verglichen mit der Specklegröße von 5 mm. Die Tiefenschärfe eines typischen Empfangsteleskops von 20cm Aperturdurchmesser und einer Brennweite von 1m liegt in 100m Entfernung bei etwa 20m, was die axiale Ausdehnung aller typischen Wirbel umfassen kann, damit diese dann ohne Neufokussierung des Teleskops und bloß durch Zeitverschiebung des Empfangsbereiches der Kamera, im stationärem Fall mit einer Längenauflösung von 3m umfasst werden können Da die typische Start- und Landegeschwindigkeit eines Flugzeuges bei 100m/s liegt, hat es sich zwischen je zwei Pulsen des Lasers und Aufnahme der Kamera um etwa 3m vorwärts bewegt. Hier könnten damit die gleichen Verhältnisse wie im stationären Fall, aber ohne Zeitverschiebung der Kamerabelichtung von Puls zu Puls erreicht werden.

Allen hier vorgeschlagenen Messverfahren ist gemeinsam, dass bei jedem Messvorgang flächenhafte Zustandsänderungen aus einem definierten Messvolumen zu unterschiedlichen Zeiten gemessen werden. Dies bereitet bei stationären Lidar-Systemen keine besonderen Probleme. Denn hier ist der Messort bei einer fest eingestellten Pulslaufzeit fix, und der Zeitabstand zwischen zwei Aufnahmen kann durch Verwendung von Doppelpulsen mit einstellbarem Zeitabstand eingestellt werden. Da ein Lidar-System im Flugzeug selbst in Bewegung ist, muss dafür gesorgt werden, dass trotz der Zeitdifferenz zwischen den Aufnahmen das gleiche Messvolumen erfasst wird und dass trotz der Eigenbewegung des Flugzeugs ein möglicher Einfluss auf die Einzelmessung minimal bleibt.

Die Erfindung beschreibt gemäß einem besonderen Aspekt ein Verfahren zur Erfassung und Vermessung von Luftturbulenzen mit einem Lidar-System, bei dem ein gepulster, aufgeweiteter Laserstrahl vorgegebener Wellenlänge zu einem Raumbereich hin ausgesandt wird und das aus dem Raumbereich zurückgestreute Licht empfangen wird, wobei zur Bestimmung der Luftbewegung die Intensitätsverteilung im Querschnitt des Laserstrahles mit Kameras nach einer bestimmten Laufzeit des Laserstrahles durch die Atmosphäre über eine bestimmte Belichtungsdauer der Kameras aufgenommen und ausgewertet wird.

Bevorzugt wird die Intensitätsverteilung durch Aufbrechen des ursprünglich ungestörten Laserstrahles in Speckle in den Luftturbulenzen ausgewertet.

Vorteilhafterweise wird der in seiner Intensitätsverteilung vorher im Lidar modulierte und zusätzlich in den Luftturbulenzen beeinflusste Laserstrahl ausgewertet.

## Patentansprüche

1. Verfahren zur Messung von Luftturbulenzen mit einem Lidar-System, insbesondere an Bord von Luftfahrzeugen, bei dem ein gepulster aufgeweiteter Laserstrahl (12) vorgegebener Wellenlänge zu einem Raumbereich hin ausgesandt wird und aus dem Raumbereich zurückgestreutes Licht empfangen wird, **dadurch gekennzeichnet, dass** ein Laserpuls ausgesendet wird und zu einem ersten Zeitpunkt t1 und zu einem zweiten Zeitpunkt t2 nach Aussenden des Laserpulses (L) jeweils die Intensitätsverteilung im Querschnitt des zurückgestreuten Lichts gemessen wird, und aus dem Vergleich beider Intensitätsverteilungen eine Luftturbulenz in einem durch die Zeitpunkte t1 und t2 definierten Messfeld bestimmt wird,
**dadurch gekennzeichnet, dass** durch die jeweilige Messung der Intensitätsverteilung Speckles, die bei der Rückstreuung des Laserpulses (L) an Luftmolekülen und Aerosolen entstehen, im Querschnitt des zurückgestreuten Lichts detektiert werden und aus dem Vergleich der Specklemuster die Luftturbulenz bestimmt wird.

2. Verfahren nach Anspruch 1, **dadurch gekennzeichnet, dass** die Intensitätsverteilungen zu beiden Zeitpunkten t1 und t2 mittels einer Kamera (21, 22) bei einer definierten Belichtungsdauer aufgenommen werden und aus den entstehenden Bildern eine Bilddarstellung der Brechungsindexvariation im Messfeld erzeugt wird.

3. Verfahren nach einem der vorhergehenden Ansprüche, **dadurch gekennzeichnet, dass** eine Kreuzkorrelation der Intensitätsverteilungen durchgeführt wird, um die Brechungsindexvariation im Messfeld als Bild darzustellen.

4. Verfahren nach einem der vorhergehenden Ansprüche, **dadurch gekennzeichnet, dass** eine Vielzahl von Laserpulsen (L) periodisch emittiert wird, um in definierten zeitlichen Abständen eine Vielzahl von Messungen durchzuführen.

5. Verfahren nach Anspruch 4, **dadurch gekennzeichnet, dass** das Verfahren an Bord eines Luftfahrzeugs durchgeführt wird, wobei die Pulsfrequenz der emittierten Laserpulse (L) in Abhängigkeit von der Fluggeschwindigkeit derart gewählt wird, dass Luftturbulenzen in einem definierten Abstand vor dem Luftfahrzeug ermittelt werden.

6. Verfahren nach einem der vorhergehenden Ansprüche, **dadurch gekennzeichnet, dass** zu jedem Laserpuls (L) ein weiterer Laserpuls (L') ausgesendet wird, um einen Doppelpuls zu bilden, wobei aus jedem der Laserpulse (L, L') die Luftturbulenz im Messfeld bestimmt wird, und durch Korrelation der beiden Messungen die Geschwindigkeit der Luftbewegung in der Luftturbulenz ermittelt wird.

7. Verfahren nach Anspruch 6, **dadurch gekennzeichnet, dass** für jeden Laserpuls (L, L') des Doppelpulses Bilder der Intensitätsverteilungen zum Zeitpunkt t1 und t2 nach Aussenden des jeweiligen Laserpulses (L, L') aufgenommen werden, wobei durch 2-fache Korrelation der Bilder die Geschwindigkeit der Luftbewegung in der Luftturbulenz dargestellt wird.

8. Verfahren nach einem der vorhergehenden Ansprüche, **dadurch gekennzeichnet, dass** der ausgesendete Laserstrahl (12) über seinen Querschnitt in seinem Intensitätsverlauf moduliert wird.

9. Verfahren nach einem der vorhergehenden Ansprüche, **dadurch gekennzeichnet, dass** der ausgesendete Laserstrahl (12) in eine Anzahl von Teilstrahlen aufgespaltet wird, die Messkreise innerhalb des aufgeweiteten Laserstrahls bilden.

10. Verfahren nach einem der vorhergehenden Ansprüche, **dadurch gekennzeichnet, dass** ein Doppelpulslaser (10) zur Erzeugung des Laserstrahls (12) verwendet wird.

11. Verfahren nach einem der vorhergehenden Ansprüche, **dadurch gekennzeichnet, dass** mindestens zwei Kameras (21, 22) verwendet werden, um zu den Zeitpunkten t1 und t2 nach Aussenden des Laserpulses (L) die Intensitätsverteilungen aufzunehmen.

12. Lidar-System zur Messung von Luftturbulenzen, insbesondere für Luftfahrzeuge, mit einem Laser (10) zur Aussendung eines gepulsten, aufgeweiteten Laserstrahls vorgegebener Wellenlänge in einen Raumbereich, **gekennzeichnet durch**

   ■ einen Detektor (21. 22) zur Messung der Intensitätsverteilung im Querschnitt des aus dem Raumbereich zurückgestreuten Lichts zu einem ersten Zeitpunkt t1 und zu einem zweiten Zeitpunkt t2 nach Aussenden eines Laserpulses (L), wobei die Zeitpunkte t1 und t2 ein Messfeld definieren,
   ■ eine Synchronisationseinheit (25), die den Detektor (21, 22) an den Laser (10) koppelt, um die Messung zu den Zeitpunkten t1 und t2 zu veranlassen, und
   ■ eine Auswerteeinheit (30; 31, 32, 33), die aus einem Vergleich der gemessenen Intensitätsverteilungen eine Luftturbulenz ermittelt,

   wobei der Detektor (21,22) zur Bestimmung der Position von Speckles ausgestaltet ist, die bei der Rückstreuung des Laserpulses (L) an Luftmolekülen entstehen, und die Auswerteeinheit (30; 31, 32, 33) zum Vergleich von Specklemustern ausgestaltet ist, um daraus die Luftturbulenz zu bestimmen.

13. Lidar-System nach Anspruch 12, **dadurch gekennzeichnet, dass** der Detektor (21, 22) mindestens eine Kamera umfasst, welche die Intensitätsverteilungen zu den beiden Zeitpunkten t1 und t2 bei einer definierten Belichtungsdauer aufnimmt, wobei die Auswerteeinheit (30; 31, 32, 33) aus den entstehenden Bildern eine Bilddarstellung der Brechungsindexvariation im Messfeld erzeugt.

14. Lidar-System nach einem der Ansprüche 12 oder 13, **dadurch gekennzeichnet, dass** die Auswerteeinheit (30; 31, 32, 33) zur Durchführung einer Kreuzkorrelation der Intensitätsverteilungen ausgestaltet ist, um die Brechungsindexvariation in einem Messfeld, das durch die Zeitpunkte t1 und t2 definiert ist, als Bild darzustellen,

15. Lidar-System nach einem der Ansprüche 12 bis 14, **dadurch gekennzeichnet, dass** der Laser (10) zur Emission einer Vielzahl von Laserpulsen (L) ausgestaltet ist, um in definierten zeitlichen Abständen eine Vielzahl von Messungen durchzuführen.

16. Lidar-System nach Anspruch 15, **dadurch gekennzeichnet, dass** es zum Einsatz an Bord eines Luftfahrzeugs ausgestaltet ist, wobei die Pulsfrequenz der emittierten Laserpulse (L) in Abhängigkeit von der Fluggeschwindigkeit derart gewählt ist, dass Luftturbulenzen in einem definierten Abstand vor dem Luftfahrzeug bestimmbar sind.

17. Lidar-System nach einem der Ansprüche 12 bis 16, **dadurch gekennzeichnet, dass** der Laser (10) ein Doppelpulslaser ist, der zu jedem Laserpuls (L) einen weiteren Laserpuls (L') aussendet, wobei die Auswerteeinheit aus jedem Laserpuls (L, L') die Luftturbulenz im Messfeld bestimmt und durch Korrelation der beiden Messungen die Geschwindigkeit der Luftbewegung in der Luftturbulenz ermittelt.

18. Lidar-System nach Anspruch 17, **dadurch gekennzeichnet, dass** der Detektor (21, 22) für jeden Laserpuls (L, L') des Doppelpulses Bilder der Intensitätsverteilungen zum Zeitpunkt t1 und t2 nach Aussenden des jeweiligen Laserpulses (L, L') aufnimmt, und die Auswerteeinheit (31, 32, 33) durch 2-fache Korrelation der Bilder die Geschwindigkeit der Luftbewegung in der Luftturbulenz darstellt.

19. Lidar-System nach einem der Ansprüche 12 bis 18, **gekennzeichnet durch** einen räumlichen Modulator (50), der den ausgesendeten Laserstrahl (12) über seinen Querschnitt in seinem Intensitätsverlauf moduliert

20. Lidar-System nach einem der Ansprüche 12 bis 19, **gekennzeichnet durch** ein holografisches Transmissionsgitter (51) zur Aufspaltung des ausgesendeten Laserstrahls (12) in eine Anzahl von Teilstrahlen.

21. Lidar-System nach einem der Ansprüche 12 bis 20, **dadurch gekennzeichnet, dass** der Detektor (21, 22) mindestens zwei Kameras umfasst, um zu den Zeitpunkten t1 und t2 nach Aussenden des Laserpulses die Intensitätsverteilungen aufzunehmen.

22. Luftfahrzeug, insbesondere Flugzeug oder Hubschrauber, **dadurch gekennzeichnet, dass** das Luftfahrzeug ein Lidar-System nach einem der Ansprüche 12 bis 21 aufweist.

**Claims**

1. A method for measuring air turbulence by means of a lidar system, in particular on board aircraft, in which method a pulsed expanded laser beam (12) of a predetermined wavelength is emitted to a spatial area, and light backscattered from this spatial area is received, **characterised in that** a laser pulse is emitted and, at a first point in time t1 and at a second point in time t2 after emission of the laser pulse (L), the intensity distribution in the cross-section of the backscattered light is measured, and from the comparison of both intensity distributions the air turbulence in a measuring field defined by the points in time t1 and t2 is determined, **characterised in that** by way of the respective measuring of the intensity distribution, speckles, which during backscattering of the laser pulse (L) from air molecules and aerosols arise, are detected in the cross-section of the backscattered light, and from the comparison of the speckle patterns the air turbulence is determined.

2. The method according to claim 1, **characterised in that** images of the intensity distributions are taken at the two points in time t1 and t2 by means of a camera (21, 22) at a defined duration of exposure, and from the images that arise an image representation of the refractive index variation in the measuring field is produced.

3. The method according to any one of the preceding claims, **characterised in that** cross correlation of the intensity distributions is conducted in order to display as an image the refractive index variation in the measuring field.

4. The method according to any one of the preceding claims, **characterised in that** a multitude of laser pulses (L) are periodically determined in order to carry out a multitude of measurements at defined time intervals.

5. The method according to claim 5, **characterised in that** the method is carried out on board an aircraft, wherein the frequency of the emitted laser pulses (L) depending on the flight speed is selected such that air turbulence is determined at a defined distance in front of the aircraft.

6. The method according to any one of the preceding claims, **characterised in that** with each laser pulse (L) a further laser pulse (L') is emitted in order to form a double pulse, wherein from each of the laser pulses (L, L') the air turbulence in the measuring field is determined, and by correlation of the two measurements the velocity of the air movement in the air turbulence is determined.

7. The method according to claim 6, **characterised in that** for each laser pulse (L, L') of the double pulse, images of the intensity distributions at the points in time t1 and t2 after emission of the respective laser pulse (L, L') are taken, wherein by means of two-fold correlation of the images the velocity of the air movement in the air turbulence is presented.

8. The method according to any one of the preceding claims, **characterised in that** the emitted laser beam (12) over its cross-section is modulated in its intensity gradient.

9. The method according to any one of the preceding claims, **characterised in that** the emitted laser beam (12) is split into a number of partial beams that form measuring circles within the expanded laser beam.

10. The method according to any one of the preceding claims, **characterised in that** a double pulse laser (10) is used for generating the laser beam (12).

11. The method according to any one of the preceding claims, **characterised in that** at least two cameras (21, 22) are used in order to take images of the intensity distributions at the points in time t1 and t2 after emission of the laser pulse (L).

12. A lidar system for measuring air turbulence, in particular for aircraft, comprisinga laser (10) for emitting a pulsed expanded laser beam of a predetermined wavelength to a spatial area, **characterised by**

■ a detector (21, 22) for measuring the intensity distribution in the cross-section of the light backscattered from the spatial area at a first point in time t1 and at a second point in time t2 after emission of a laser pulse (L), whereby the points in time t1 and t2 are defining a measuring field.
■ a synchronisation unit (25) that couples the detector (21, 22) to the laser (10) in order to trigger measuring at the points in time t1 and t2; and
■ an evaluation unit (30; 31, 32, 33) that from a comparison of the measured intensity distributions determines air turbulence,

wherein the detector (21, 22) is designed for determining the position of speckles that arise when the laser pulse (L) is backscattered from air molecules, and the evaluation unit (30; 31, 32, 33) is designed for comparing speckle patterns in order to determine air turbulence from them.

13. The lidar system according to claim 12, **characterised in that** the detector (21, 22) comprises at least one camera which takes images of the intensity distributions at the two points in time t1 and t2 at a defined duration of exposure, wherein from the images that arise the evaluation unit (30; 31, 32, 33) produces an image representation of the refractive index variation in the measuring field.

14. The lidar system according to any one of claims 12 to 13, **characterised in that** the evaluation unit (30; 31, 32, 33) is designed to conduct a cross correlation of the intensity distributions in order to display as an image the refractive index variation in a measuring field that is defined by the points in time t1 and t2.

15. The lidar system according to any one of claims 12 to 14, **characterised in that** the laser (10) is designed to emit a multitude of laser pulses (L) in order to conduct a multitude of measurements at defined time intervals.

16. The lidar system according to claim 15, **characterised in that** it is designed for use on board an aircraft, wherein the pulse frequency of the emitted laser pulses (L) depending on the flight speed is selected such that air turbulence is determinable at a defined distance in front of the aircraft.

17. The lidar system according to any one of claims 12 to 16, **characterised in that** the laser (10) is a double pulse laser which with each laser pulse (L) emits a further laser pulse (L'), wherein from each laser pulse (L, L') the evaluation unit determines the air turbulence in the measuring field, and by correlation of the two measurements determines the velocity of the air movement in the air turbulence.

18. The lidar system according to claim 17, **characterised in that** for each laser pulse (L, L') of the double pulse the detector (21, 22) takes images of the intensity distributions at the points in time t1 and t2 after emission of the respective laser pulse (L, L'), and by means of two-fold correlation of the images the evaluation unit (31, 32, 33) presents the velocity of the air movement in the air turbulence.

19. The lidar system according to any one of claims 12 to 18, **characterised by** a spatial modulator (50) which modulates the emitted laser beam (12) over its cross-section in its intensity gradient.

20. The lidar system according to any one of claims 12 to 19, **characterised by** a holographic transmission grating (51) for splitting the emitted laser beam (12) into a number of partial beams.

21. The lidar system according to any one of claims 12 to 20, **characterised in that** the detector (21, 22) comprises at least two cameras in order to take images of the intensity distributions at the points in time t1 and t2 after emission of the laser pulse.

22. An aircraft, in particular an aeroplane or a helicopter, **characterised in that** the aircraft comprises a lidar system according to any one of claims 12 to 21.


**Revendications**

1. Procédé de mesure de turbulences de l'air avec un système Lidar, en particulier à bord d'aéronefs, dans lequel un faisceau laser (12) élargi pulsé d'une longueur d'onde prédéfinie est émis en direction d'un espace clos et de la lumière rétrodiffusée est reçue de l'espace clos, une impulsion laser étant émise et à un premier instant t1 et à un deuxième instant t2 après l'émission de l'impulsion laser (L) la répartition de l'intensité respective est mesurée dans la section transversale de la lumière rétrodiffusée et à partir de la différence des deux répartitions de l'intensité, une turbulence de l'air est définie dans un champ de mesure défini entre les instants t1 et t2,
**caractérisé en ce que** par la mesure respective de la répartition de l'intensité, des chatoiements qui se produisent lors de la rétrodiffusion de l'impulsion laser (L) sur les molécules d'air et les aérosols sont détectés dans la section transversale de la lumière rétrodiffusée, et la turbulence de l'air est déterminée à partir de la différence des modèles de chatoiement.

2. Procédé selon la revendication 1, **caractérisé en ce que** les répartitions de l'intensité aux deux instants t1 et t2 sont enregistrées au moyen d'une caméra (21, 22) avec une durée d'éclairage définie et une représentation en image de la variation de l'indice de réfraction dans le champ de mesure est effectuée à partir des images produites.

3. Procédé selon l'une des revendications précédentes, **caractérisé en ce qu'**une corrélation croisée des répartitions de l'intensité est effectuée pour représenter en image la variation de l'indice de réfraction dans le champ de mesure.

4. Procédé selon l'une des revendications précédentes, **caractérisé en ce qu'**une pluralité d'impulsions laser (L) sont émises périodiquement pour effectuer une pluralité de mesures dans des intervalles de temps définis.

5. Procédé selon la revendication 4, **caractérisé en ce que** le procédé est effectué à bord d'un aéronef, la fréquence d'impulsion des impulsions laser (L) émises étant choisie en fonction de la vitesse de vol de telle manière que des turbulences de l'air soient calculées dans une distance définie devant l'aéronef.

6. Procédé selon l'une des revendications précédentes, **caractérisé en ce qu'**à chaque impulsion laser (L) une autre impulsion laser (L') est émise pour former une double impulsion, sachant qu'à partir de chaque impulsion laser (L, L'), la turbulence de l'air est déterminée dans le champ de mesure et que par la corrélation des deux mesures, la vitesse du mouvement de l'air dans la turbulence de l'air est calculée.

7. Procédé selon la revendication 6, **caractérisé en ce que** pour chaque impulsion laser (L, L') de la double impulsion, des images des répartitions de l'intensité aux instants t1 et t2 sont enregistrées après l'émission de l'impulsion laser (L, L') respective, sachant que par une corrélation double des images, la vitesse du mouvement de l'air dans la turbulence de l'air est représentée.

8. Procédé selon l'une des revendications précédentes, **caractérisé en ce que** le faisceau laser (12) émis est modulé dans son tracé d'intensité sur sa section transversale.

9. Procédé selon l'une des revendications précédentes, **caractérisé en ce que** le faisceau laser (12) émis est fractionné en un nombre de faisceaux partiels qui forment les cercles de mesure à l'intérieur du faisceau laser élargi.

10. Procédé selon l'une des revendications précédentes, **caractérisé en ce qu'**un laser à double impulsion (10) est employé pour produire le faisceau laser (12).

11. Procédé selon l'une des revendications précédentes, **caractérisé en ce qu'**au moins deux caméras (21, 22) sont employées pour enregistrer les répartitions de l'intensité aux instants t1 et t2 après l'émission de l'impulsion laser (L).

12. Système Lidar de mesure de turbulences de l'air, en particulier pour des aéronefs avec un laser (10) pour émettre un faisceau laser élargi pulsé d'une longueur d'onde prédéfinie dans un espace clos, **caractérisé par**

   ■ un détecteur (21, 22) pour mesurer la répartition de l'intensité dans la section transversale de la lumière rétrodiffusée depuis l'espace clos à un premier instant t1 et à un deuxième instant t2 après l'émission d'une impulsion laser (L), les instants t1 et t2 définissant un champ de mesure,

■ une unité de synchronisation (25) qui couple le détecteur (21, 22) au laser (10) pour effectuer la mesure aux instants t1 et t2, et

■ une unité d'évaluation (30; 31, 32, 33) qui calcule une turbulence de l'air à partir de la comparaison des répartitions de l'intensité mesurées,

sachant que le détecteur (21, 22) est arrangé pour déterminer la position de chatoiements qui se produisent lors de la rétrodiffusion de l'impulsion laser (L) sur les molécules d'air, et l'unité d'évaluation (30; 31, 32, 33) est arrangée pour comparer les modèles de chatoiements pour en déterminer la turbulence de l'air.

13. Système Lidar selon la revendication 12, **caractérisé en ce que** le détecteur (21, 22) comprend au moins une caméra qui enregistre les répartitions de l'intensité aux deux instants t1 et t2 avec une durée d'éclairage définie, l'unité d'évaluation (30; 31, 32, 33) produisant à partir des images produites une représentation en image de la variation de l'indice de réfraction dans le champ de mesure.

14. Système Lidar selon l'une des revendications 12 ou 13, **caractérisé en ce que** l'unité d'évaluation (30; 31, 32, 33) est arrangée pour effectuer une corrélation croisée des répartitions de l'intensité pour représenter en image la variation de l'indice de réfraction dans un champ de mesure qui est défini par les instants t1 et t2.

15. Système Lidar selon l'une des revendications 12 à 14, **caractérisé en ce que** le laser (10) est arrangé pour émettre une pluralité d'impulsions laser (L) pour effectuer une pluralité de mesures à des intervalles de temps définis.

16. Système Lidar selon la revendication 15, **caractérisé en ce qu'**il est arrangé pour être utilisé à bord d'un aéronef, la fréquence d'impulsion des impulsions laser (L) émises étant choisie en fonction de la vitesse de vol de telle manière que des turbulences de l'air peuvent être déterminées dans une distance définie devant l'aéronef.

17. Système Lidar selon l'une des revendications 12 à 16, **caractérisé en ce que** le laser (10) est un laser à double impulsion qui à chaque impulsion laser (L) émet une autre impulsion laser (L'), l'unité d'évaluation déterminant à partir de chaque impulsion laser (L, L') la turbulence de l'air dans le champ de mesure et calculant par corrélation des deux mesures la vitesse du mouvement de l'air dans la turbulence de l'air.

18. Système Lidar selon la revendication 17, **caractérisé en ce que** le détecteur (21, 22) enregistre pour chaque impulsion laser (L, L') de la double impulsion des images des répartitions de l'intensité aux instants t1 et t2 après l'émission de chaque impulsion laser (L, L'), et l'unité d'évaluation (31, 32, 33) représente par une corrélation double des images la vitesse du mouvement de l'air dans la turbulence de l'air.

19. Système Lidar selon l'une des revendications 12 à 18, **caractérisé par** un modulateur physique (50) qui module dans son tracé d'intensité sur sa section transversale le faisceau laser (12) émis.

20. Système Lidar selon l'une des revendications 12 à 19, **caractérisé par** une grille de transmission holographique (51) pour fractionner le faisceau laser (12) émis en un nombre de faisceaux partiels.

21. Système Lida selon l'une des revendications 12 à 20, **caractérisé en ce que** le détecteur (21, 22) comprend au moins deux caméras pour enregistrer les répartitions de l'intensité aux instants t1 et t2 après l'émission de l'impulsion laser.

22. Aéronef, en particulier avion ou hélicoptère, **caractérisé en ce que** l'aéronef présente un système Lidar selon les revendications 12 à 21.

Fig. 1

EP 1 910 868 B1

Fig. 2

Fig. 3

Fig. 4

Wirbelstruktur

Radiale Bildverzerrung durch Eigenbewegung des Flugzeugs

Laserstrahl

51

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19502993 A1
- DE 10316762 A1
- US 20030009268 A1
- US 4195931 A
- DE 4013702 C2
- US 6184981 B1

**In der Beschreibung aufgeführte Nicht-Patentliteratur**

- **Irgang, Todd D. et al.** Two-channel direct-detection Doppler lidar employing a chargecoupled device as a detector. *Applied Optics,* 20. Februar 2002, vol. 41 (6